(19) Europäisches Patentamt
European Patent Office
Office européen des brevets

(11) EP 2 534 748 B1

(12) EUROPÄISCHE PATENTSCHRIFT

(45) Veröffentlichungstag und Bekanntmachung des Hinweises auf die Patenterteilung:
17.10.2018 Patentblatt 2018/42

(21) Anmeldenummer: 10706925.4

(22) Anmeldetag: 11.02.2010

(51) Int Cl.:
$H02M\ 1/00^{(2006.01)}$      $H02M\ 7/483^{(2007.01)}$
$H02M\ 7/5387^{(2007.01)}$

(86) Internationale Anmeldenummer:
PCT/EP2010/000967

(87) Internationale Veröffentlichungsnummer:
WO 2011/098100 (18.08.2011 Gazette 2011/33)

(54) **REGELUNG EINES MODULAREN UMRICHTERS MIT VERTEILTEN ENERGIESPEICHERN MIT HILFE EINES BEOBACHTERS FÜR DIE STRÖME UND EINER SCHÄTZEREINHEIT FÜR DIE ZWISCHENKREISENERGIE**

CONTROL OF A MODULAR MULTILEVEL CONVERTER WITH AN OBSERVER FOR THE CURRENTS AND AN ESTIMATOR FOR THE ENERGY OF THE INTERMEDIATE CIRCUIT

CONTRÔLE D'UN CONVERTISSEUR MULTI-NIVEAUX MODULAIRE AVEC UN OBSERVATEUR POUR LES COURANTS ET UN ESTIMATEUR POUR L'ÉNERGIE DU CIRCUIT INTERMÉDIAIRE

(84) Benannte Vertragsstaaten:
AT BE BG CH CY CZ DE DK EE ES FI FR GB GR HR HU IE IS IT LI LT LU LV MC MK MT NL NO PL PT RO SE SI SK SM TR

(43) Veröffentlichungstag der Anmeldung:
19.12.2012 Patentblatt 2012/51

(73) Patentinhaber: Siemens Aktiengesellschaft
80333 München (DE)

(72) Erfinder:
• GÖRGES, Daniel
56291 Birkheim (DE)
• ISÁK, Michal
80809 München (DE)
• LIU, Steven
67663 Kaiserslautern (DE)
• MÜNCH, Philipp
67663 Kaiserslautern (DE)

(56) Entgegenhaltungen:
WO-A1-2008/067784

• PHILIPP MUNCH ET AL: "Modeling and current control of modular multilevel converters considering actuator and sensor delays", IECON 2009 - 35TH ANNUAL CONFERENCE OF IEEE INDUSTRIAL ELECTRONICS (IECON 2009) - 3-5 NOV. 2009 - PORTO, PORTUGAL, IEEE, PISCATAWAY, NJ, USA, 3. November 2009 (2009-11-03), Seiten 1633-1638, XP031629417, ISBN: 978-1-4244-4648-3
• SINGH B N ET AL: "Fuzzy control of integrated current controlled converter-inverter fed cage induction motor drive", INDUSTRIAL AUTOMATION AND CONTROL, 1995 (I A & C'95)., IEEE/IAS INTERN ATIONAL CONFERENCE ON (CAT. NO.95TH8005) HYDERABAD, INDIA 5-7 JAN. 1995, NEW YORK, NY, USA,IEEE, US LNKD-DOI:10.1109/IACC.1995.465850, 5. Januar 1995 (1995-01-05), Seiten 153-159, XP010146902, ISBN: 978-0-7803-2081-9

EP 2 534 748 B1

**Beschreibung**

Die Erfindung betrifft zwei Verfahrensalternativen zum Regeln eines steuerbare Leistungshalbleiter aufweisenden Umrichters gemäß den Ansprüchen 1 und 4 sowie zwei hierzu korrespondierende Anordnungen gemäß den Ansprüchen 30 und 32. Vorteilhafte Ausführungsformen sind in den abhängigen Ansprüchen definiert.

Ein solches Verfahren ist aus dem Beitrag von P. Muench et al "Modelling and Current Control of Modular Multilevel Converters considering Actuator and Sensor Delays",IECON 2009, 35th Annual Conference of IEEE Industrial Electronics, 3.-5. November 2009, Porto, Portugal, IEEE Piscataway, NJ, USA, 3. November 2009, Seiten 1633 - 1638, bereits bekannt. Bei dem dort beschriebenen Verfahren werden Zustandsistwerte von einer Beobachtungseinheit berechnet, wobei von Stellspannungswerten und gemessenen Stromwerten ausgegangen wird. Die Zustandsistwerte werden wie üblich mit Zustandssollwerten unter Gewinnung von Regeldifferenzwerten verglichen, wobei die Regeldifferenzwerte einer Steuerelektronik zugeführt werden, welche die besagten Stellspannungswerte an die Leistungshalbleiter des Umrichters überträgt.

Darüber sei in diesem Zusammenhang auf die Veröffentlichung von Singh, B. N. et al "Fuzzy Control of Integrated Current controlled Converter-Inverter fed Cage Induction Motor Drive", Januar 1995, IEEE/IAS International Conference on Hyderabad., India 5.-7. Januar 1995, Seiten 153 bis 159, verwiesen.

Aus der WO 2008/067784 A1 ist ein Verfahren zur Regelung eines mehrstufigen Umrichters für die Hochspannungsgleichstromübertragung bekannt, wobei der Umrichter ein selbstgeführter Umrichter mit abschaltbaren Leistungshalbleitern ist. So besteht der Umrichter aus einer Brückenschaltung von Leistungshalbleiterventilzweigen, wobei jeder Leistungshalbleiterventilzweig eine Reihenschaltung von Submodulen aufweist. Jedes Submodul verfügt wiederum über eine Leistungshalbleiterschaltung, die so mit einem Kondensator verschaltet ist, dass entweder die an dem Kondensator abfallende Spannung oder aber eine Nullspannung an den Ausgangsklemmen eines jeden Submoduls erzeugbar ist. Durch die Reihenschaltung der Submodule kann die an dem Leistungshalbleiterventil abfallende Spannung stufenweise eingestellt werden, wobei die Höhe einer Stufe der an der Kondensatoreinheit eines Submoduls abfallenden Spannung entspricht.

Der Erfindung liegt die Aufgabe zugrunde, ein Verfahren zum Regeln eines steuerbare Leistungshalbleiter aufweisenden Umrichters vorzuschlagen, mit dem die Stromregelung sowie die Umrichterenergieregelung und die Energiebalancierung gemeinsam vorgenommen werden können.

Zur Lösung dieser Aufgabe werden bei einem Verfahren der eingangs angegebenen Art erfindungsgemäß Zustandszwischenkreisenergieistwerte von einer Schätzereinheit unter Berücksichtigung von gemessenen Zwischenkreisenergiewerten der positiv-seitigen und der negativ-seitigen Drehspannungsquelle des Umrichters berechnet werden, wobei die Beobachtereinheit und die Schätzereinheit den Umrichter modellieren, so dass die berechneten Zustandsstromistwerte und Zustandszwischenkreisenergieistwerte im eingeschwungenen Zustand den fehlerfreien Strom- und Zwischenkreisenergiewerten entsprechen, und die fehlerfreien Strom- und Zwischenkreisenergiewerte der als periodischer Regler mit periodisch-zeitvarianter Verstärkung ausgebildeten Regelungseinheit zugeführt werden.

Wesentlich für das erfindungsgemäße Verfahren ist zunächst die Verwendung eines Modells für die Beobachtereinheit in Form eines mathematischen Zustandsraummodells, welches strukturell alle Umrichterströme berücksichtigt. Wesentlich ist ferner der Einsatz der Schätzereinheit zur Schätzung der Zwischenkreisenergien der Leistungshalbleiterzweige bzw. Phasenmodule des Umrichters, aufgeteilt in die positivseitige und die negativ-seitige Drehspannungsquelle.

Ein wesentlicher Vorteil des erfindungsgemäßen Verfahrens besteht darin, dass mit ihm sämtliche Regelungsziele für den Umrichter berücksichtigt werden. Durch die vorgesehene Mehrgrößenregelung kann eine beim Stand der Technik vorhandene, übergeordnete Umrichterenergieregelung und die Balancierung der Zwischenkreisenergien der positiv-seitigen und der negativ-seitigen Drehspannungsquelle entfallen. Durch die gemeinsame Verfolgung aller Regelungsziele ist auch eine bessere Regelung möglich, die gemäß der Wichtigkeit der Regelungsziele gewichtet erfolgen kann. Hierdurch wird die Regelung auch zusätzlich beschleunigt und ein vorgegebenes Verhalten exakt erzielt.

Infolge der erreichten beschleunigten Regelung kann die Zwischenkreisenergieregelung und die Balancierung der Energien der positiv-seitigen und der negativ-seitigen Drehspannungsquelle so verbessert werden, dass entweder eine geringere Anzahl von steuerbaren Leistungshalbleitern oder eine geringere Kondensatorkapazität des Umrichters ausreicht, um dieselben Netzfehlerfälle zu beherrschen. Dies schlägt sich in geringeren Umrichterkosten nieder.

Eine bessere Beherrschung von Netzfehlerfällen bedeutet auch eine geringere Ausfallzeit bzw. Ausfallwahrscheinlichkeit, was für Netzbetreiber in wirtschaftlicher Hinsicht von Vorteil sein dürfte.

Zum Erreichen der oben angegebenen Vorteile ist es besonders günstig, wenn eine Beobachtereinheit mit einem periodisch-zeitvarianten Systemmodell verwendet wird, das ausgehend von der allgemeinen Zustandsgleichung

$$\dot{\underline{x}} = \underline{A} \cdot \underline{x} + \underline{B} \cdot \underline{u}$$

mit $\underline{x}$ als Zustandsvariable, $\underline{\dot{x}}$ als zeitlicher Ableitung der Zustandsvariablen, $\underline{A}$ als Systemmatrix, $\underline{B}$ als Eingangsmatrix und $\underline{u}$ als Eingangsvariable eine zeitinvariante Systemmatrix $\underline{A}_{PLTV}$ und eine zeitvariante Eingangsmatrix $\underline{B}_{PLTV}(t)$ aufweist mit

$$\underline{x}_{PLTV} = \begin{pmatrix} \underline{x} \\ \underline{x}_{\alpha\beta} \\ \underline{x}_{dq^{-1}} \\ \underline{w}_{\alpha\beta} \\ \underline{w}_{dq^{-1}} \\ \underline{w} \end{pmatrix},$$

wobei $\underline{x}$ für den gemessenen, park-transformierten Strom, $\underline{x}_{\alpha\beta}$ für den alpha-beta-transformierten und $\underline{x}_{dq-1}$ für den zweifach park-rücktransformierten gemessenen Strom (Gegensystem), $\underline{w}_{\alpha\beta}$ für die alpha-beta-transformierten, gemessenen Zwischenkreisenergiewertesummen von positiv-seitiger und negativ-seitiger Drehspannungsquelle und $\underline{w}_{dq-1}$ für die alpha-beta-tranformierten, gemessenen Zwischenkreisenergiewertedifferenzen zwischen positiv-seitiger und negativ-seitiger Drehspannungsquelle und $w$ für die gemessenen Zwischenkreisenergiewerte des gesamten Umrichters steht.

Vorteilhafterweise sind die Zustandssollwerte Stromsollwerte $\underline{x}_{Soll}(k)$ und Zwischenkreisenergiesollwerte $\underline{w}_{Soll}(k)$.

Eine weitere Lösung der oben angegebenen Aufgabe wird darin gesehen, dass ausgehend von dem eingangs angegebenen Stand der Technik erfindungsgemäß die Zustandsistwerte $\hat{\underline{x}}(k)$ von einer Beobachtereinheit ausgehend von den Stellspannungswerten $\underline{u}(k)$ und unter Berücksichtigung von gemessenen Stromwerten $x(k)$ berechnet werden und Zustandszwischenkreisenergieistwerte $\hat{\underline{w}}(k)$ von einer Schätzereinheit unter Berücksichtigung von gemessenen Zwischenkreisenergiewerten $\underline{w}(k)$ der positiv-seitigen und der negativ-seitigen Drehspannungsquelle des Umrichters berechnet werden, wobei die Beobachtereinheit und die Schätzereinheit den Umrichter modellieren, so dass die berechneten Zustandsstromistwerte $\hat{\underline{x}}(k)$ und Zustandszwischenkreisenergieistwerte $\hat{\underline{w}}(k)$ der Gesamtenergie des Umrichters und der Differenz der Zustandszwischenkreisenergiewerte $\underline{w}(k)$ im eingeschwungenen Zustand den fehlerfreien Strom- und Zwischenkreisenergiewerten entsprechen, und die fehlerfreien Strom- $\hat{\underline{x}}(k)$ und Zwischenkreisenergiewerte $\hat{\underline{w}}(k)$ einer als periodischer Regler mit periodisch-zeitvarianter Verstärkung ausgebildeten Regelungseinheit zugeführt werden.

Bei dieser alternativen Lösung sind vorteilhafterweise die Zustandssollwerte Stromsollwerte $\underline{x}_{Soll}(k)$ und Zwischenkreisenergiesollwerte $\underline{w}_{soll}(k)$.

Zur Regelgenauigkeit des erfindungsgemäßen Verfahrens trägt es in vorteilhafterweise auch bei, wenn die Zustandssollwerte mittels einer periodisch arbeitenden Vorsteuereinheit aus vorgegebenen Sollwerten gebildet werden.

Die periodisch-zeitvariante Verstärkung kann bei dem periodischen Regler in verschiedener Weise erreicht werden. Als besonders vorteilhaft wird es angesehen, wenn bei dem periodischen Regler die periodisch-zeitvariante Verstärkung mittels periodischen Umschaltens von Reglermatrizen vorgenommen wird.

Um eine besonders hohe Regelgenauigkeit zu erzielen, werden die Zustandsistwerte $\hat{\underline{x}}(k)$ von einer Beobachtereinheit ausgehend von den Stellspannungswerten $\underline{u}(k)$ und den Zustandsmesswerten $\underline{y}_d(k)$ berechnet, wobei die Beobachtereinheit Störungseffekte berücksichtigt, so dass die Zustandsistwerte $\hat{\underline{x}}(k)$ im eingeschwungenen Zustand von Störungseffekten befreiten ungestörten Strommesswerten entsprechen.

Bei dieser Ausführungsform des erfindungsgemäßen Verfahrens ist die Beobachtereinheit so eingerichtet, dass der Umrichter in ein mathematisches Modell überführt ist, das Störungseffekte berücksichtigt. Der Zustand des Umrichters wird hierbei zweckmäßigerweise durch die Regelgrößen, also beispielsweise die Netz-, Gleich- und Kreisströme, beschrieben, wobei die Regelgrößen in einem Zustandsvektor $\hat{\underline{x}}(k)$ zusammengefasst sind. Entsprechendes gilt für die Sollgrößen, die ebenfalls in einem Sollvektor $\underline{x}_{Soll}(k)$ zusammengefasst werden. Ausgehend von den eingangsseitig zur Verfügung gestellten Stellspannungswerten modelliert die Beobachtereinheit den Umrichter. Insbesondere wird das dynamische Verhalten des Umrichters mathematisch nachgebildet, wobei zweckmäßige Matrizen hergeleitet werden, die auf den Zustandsvektor beziehungsweise den Vektor der Stellgrößen $\underline{u}(k)$ angewandt werden. Ausgangsseitig der Beobachtereinheit wird dann ein Satz von Zustandsistwerten $\hat{\underline{x}}(k)$ bereitgestellt, wobei die Zustandsistwerte $\hat{\underline{x}}(k)$ Zustandsmesswerten entsprechen, die im eingeschwungenen Zustand frei von Störungseffekten sind. Die Zustandsistwerte $\hat{\underline{x}}(k)$ entsprechen im eingeschwungenen Zustand mit anderen Worten ungestörten Messwerten des Zustandes des Umrichters und werden der Regelung zugeführt. Erfindungsgemäß kann die Regelung daher relativ präzise ausgeführt werden.

Die Störungseffekte können u. a. auf Netzfehlern beruhen. Die Eingangsgrößen des Systems müssen nämlich gemessen werden, wobei die Messung fehlerbehaftet sein kann. Eine fehlerhafte Messung kann auch als Störgröße am Eingang des Systems aufgefasst werden.

Ferner können sich Abweichungen in den Stellspannungen ergeben, die sich ebenfalls als Störeffekte auswirken.

Störungen am Ausgang wirken als Störung unmittelbar auf die Regelgrößen.

Auch Bauteilabweichungen verursachen im stationären Fall konstante Abweichungen, die bei dem erfindungsgemäßen Verfahren ebenfalls als Störungen berücksichtigt und kompensiert werden. Die Abweichungen der Parameter verursachen einen Regelfehler, der auf eine stationäre Störung des Systems abgebildet werden kann.

Auch Oberschwingungen wurden im vorliegenden Zusammenhang als Störungen aufgefasst und mit dem erfindungsgemäßen Verfahren ausgeregelt.

Zweckmäßigerweise stellt die Beobachtereinheit neben den ungestörten Zustandsistwerten $\hat{\underline{x}}(k)$ gestörte Zustandsmodellmesswerte $\hat{\underline{y}}_d(k)$ bereit, die messbaren Zustandsmesswerten $\underline{y}_d(k)$ entsprechen, wobei die Zustandsmodellmesswerte $\hat{\underline{y}}_d(k)$ mit durch Messungen erhaltenen Zustandsmesswerten $\underline{y}_d(k)$ unter Gewinnung einer Modellmesswertabweichung verglichen werden, die Modellmesswertabweichung der Beobachtereinheit eingangsseitig zugeführt und die Modellierung des Umrichters so durchgeführt wird, dass die Modellmesswertabweichung möglichst klein ist. Gemäß dieser zweckmäßigen Weiterentwicklung erfolgt die Modellierung des Umrichters mit einer Rückkopplung, wobei ausgenutzt wird, dass das gewählte mathematische Modell des Umrichters nicht nur die ungestörten Zustandsistwerte $\hat{\underline{x}}(k)$ liefert, sondern auch die mit Störungseffekten behafteten Zustandsmodellmesswerte. Die Zustandsmodellmesswerte entsprechen daher den durch reale Messungen erhältlichen Zustandsmesswerten. Ein Vergleich der Zustandsmesswerte mit den Zustandsmodellmesswerten, also mit anderen Worten die Bildung der Modellmesswertabweichung zwischen diesen beiden Größen, gibt daher Aufschluss über die Güte der Modellierung. Die Modellmesswertabweichung wird der Beobachtereinheit als zweite Eingangsgröße zugeführt. Durch ihre Minimierung wird daher das Regelungsverfahren verbessert. Im Idealfall ist die Modellmesswertabweichung gleich null.

Zur diesbezüglich zweckmäßigen Weiterentwicklung wird die Modellmesswertabweichung der Beobachtereinheit über eine Rückführungseinheit zugeführt, welche die Modellmesswertabweichung zweckmäßig verstärkt. Wird der Zustand des Umrichters über einen Zustandsvektor $\hat{\underline{x}}(k)$, beispielsweise einem aus fünf Strömen des Umrichters bestehenden Vektor, beschrieben, ergibt sich auch ein Vektor für die Modellmesswertabweichung. In diesem Fall wendet die Rückführungseinheit eine aus Konstanten bestehende Matrix auf den Vektor der Modellmesswertabweichung an. Mit anderen Worten wird die Modellmesswertabweichung durch diese Matrix in einer Weise verstärkt, die für die weitere Modellierung des Umrichters unter Minimierung der Modellmesswertabweichung zweckmäßig ist.

Zweckmäßigerweise wird der Umrichter mit Hilfe eines Zustandsraummodells gemäß

$$\hat{\underline{x}}'(k+1) = \underline{\Phi}\,\hat{\underline{x}}'(k) + \underline{\Gamma}\,\underline{u}(k)$$

$$\hat{\underline{y}}_d(k) = \underline{H}\,\hat{\underline{x}}'(k)$$

modelliert, wobei $\hat{\underline{x}}'(k)$ einem Zustandsvektor des Umrichters einschließlich gestörter Zustände, $\underline{u}(k)$ einem Vektor der Stellspannungen, $\underline{\Phi}$, $\underline{\Gamma}$ und $\underline{H}$ Modellmatrizen und $\hat{\underline{y}}_d(k)$ einem Vektor von mit Störungen behafteten Zustandsmodellmesswerten entsprechen. $k$ indiziert den jeweiligen Abtastschritt. Das gewählte Streckenmodell ist die diskrete Form einer zeitkontinuierlichen Differenzialgleichung und wird auch als Differenzengleichung bezeichnet.

Bei einem mehrstufigen Umrichter mit Leistungshalbleiterventilzweigen, die zu einer Sechs-Puls-Brücke miteinander verschaltet sind, wobei jeder Leistungshalbleiterventilzweig aus einer Reihenschaltung von Submodulen besteht, wobei jedes Submodul eine Leistungshalbleiterschaltung sowie einen Kondensator aufweist, ist es ausreichend, den Zustand des Umrichters mit lediglich fünf Strömen zu beschreiben, da sich die anderen Ströme des Umrichters aus den fünf Zustandsgrößen berechnen lassen. Die an dem Umrichter auftretenden Ströme sind beispielsweise Netzströme, Gleichströme sowie Kreisströme zwischen den Ventilzweigen des Umrichters. Um Störungseffekte im Modell berücksichtigen zu können, wird der Zustandsvektor $\hat{\underline{x}}'(k)$ um die gestörte Zustandsmesswerte $\hat{\underline{y}}_d(k)$ zu $\hat{x}'(k)$ erweitert.

Um die Regelungsgenauigkeit noch weiter zu erhöhen, werden bei einer vorteilhaften Weiterbildung des erfindungsgemäßen Verfahrens bei der Modellierung der Beobachtereinheit zusätzlich Verzögerungseffekte berücksichtigt, so dass die Zustandsistwerte $\hat{\underline{x}}(k)$ im eingeschwungenen Zustand von Verzögerungseffekten befreiten unverzögerten und ungestörten Strommesswerten entsprechen.

Ausgangsseitig der Beobachtereinheit wird ein Satz von Zustandsistwerten $\hat{\underline{x}}(k)$ bereitgestellt, wobei die Zustandsistwerte $\hat{\underline{x}}(k)$ Zustandsmesswerten entsprechen, die frei von Störungs- und Verzögerungseffekten sind. Die Zustandsistwerte $\hat{\underline{x}}(k)$ entsprechen mit anderen Worten unverzögerten und ungestörten Messwerten des Zustandes des Umrichters und werden der Regelung zugeführt. Erfindungsgemäß kann die Regelung daher schneller ausgeführt werden, ohne dass Instabilitäten zu befürchten sind.

Zweckmäßigerweise stellt die Beobachtereinheit neben den ungestörten und unverzögerten Zustandsistwerten $\hat{\underline{x}}(k)$ gestörte und verzögerte Zustandsmodellmesswerte $\hat{\underline{y}}_d(k)$ bereit, die messbaren Zustandsmesswerten $\underline{y}_d(k)$ entsprechen, wobei die Zustandsmodellmesswerte $\hat{\underline{y}}_d(k)$ mit durch Messungen erhaltenen Zustandsmesswerten $\underline{y}_d(k)$ unter Gewinnung einer Modellmesswertabweichung verglichen werden, die Modellmesswertabweichung der Beobachtereinheit eingangsseitig zugeführt und die Modellierung des Umrichters so durchgeführt wird, dass die Modellmesswertabweichung möglichst klein ist.

Gemäß dieser zweckmäßigen Weiterentwicklung erfolgt die Modellierung des Umrichters mit einer Rückkopplung, wobei ausgenutzt wird, dass das gewählte mathematische Modell des Umrichters nicht nur die ungestörten und unverzögerten Zustandsistwerte $\hat{\underline{x}}(k)$ liefert, sondern auch die mit Störungs- und Verzögerungseffekten behafteten Zustandsmodellmesswerte. Die Zustandsmodellmesswerte entsprechen daher den durch reale Messungen erhältlichen Zustandsmesswerten. Ein Vergleich der Zustandsmesswerte mit den Zustandsmodellmesswerten, also mit anderen Worten die Bildung der Modellmesswertabweichung zwischen diesen beiden Größen, gibt daher Aufschluss über die Güte der Modellierung. Die Modellmesswertabweichung wird der Beobachtereinheit als zweite Eingangsgröße zugeführt. Durch ihre Minimierung wird daher das Regelungsverfahren verbessert. Im Idealfall ist die Modellmesswertabweichung gleich null.

Bei einer bevorzugten Variante der Weiterbildung des erfindungsgemäßen Verfahrens umfasst die Berücksichtigung von Verzögerungseffekten das Berücksichtigen von Messverzögerungen, die bei der digitalen Erfassung der elektrischen Ströme des Umrichters entstehen, und die Berücksichtigung von Stellverzögerungen, die von der Steuerelektronik verursacht werden. Bei der Erfassung der Zustandsmesswerte werden beispielsweise die Ströme des Umrichters gemessen. Das dabei gewonnene Messsignal wird in Abtastschritten k unter Gewinnung von Abtastwerten fortlaufend abgetastet. Die Abtastwerte werden anschließend digitalisiert. Die Modellierung der sich dabei einstellenden Messverzögerung erfolgt zweckmäßigerweise unter der Annahme, dass die Messverzögerung eine Zeitdauer von vier Abtastschritten entspricht. Es hat sich gezeigt, dass eine solche Annahme für einen selbstgeführten mehrstufigen Umrichter für die Hochspannungsgleichstromübertragung zweckmäßig ist.

Gemäß einer weiteren Ausgestaltung der Erfindung wird die eine Stellverzögerung $\tau$

$$\tau = (l-1)T + \tau'$$

modelliert, wobei $l$ der Anzahl der Abtastschritte entspricht, deren Summe kleiner ist als die Stellverzögerung $\tau$. $\tau'$ wird als Restanteil bezeichnet und ist in jedem Falle kürzer als die Zeitdauer zwischen zwei Abtastschritten T. Bei dieser Modellierung der Stellverzögerung hat sich eine Größe von $l=2$ als zweckmäßig für einen mehrstufigen selbstgeführten Umrichter erwiesen.

Um Verzögerungseffekte im Modell berücksichtigen zu können, wird der Zustandsvektor $\hat{\underline{x}}(k)$ um die verzögerten Zustandsmesswerte $\hat{\underline{y}}_d(k)$ zu $\hat{\underline{x}}'(k)$ erweitert.

Um eine besonders schnelle Regelung bei guter Stabilität zu erreichen, werden bei einer weiteren vorteilhaften Weiterbildung des erfindungsgemäßen Verfahrens Zustands-Zwischenkreisenergiewerte mittels einer auf ein Signalmodell der Zwischenkreisenergiewerte zurück greifenden Schätzereinheit aus gemessenen Zwischenkreisenergiewerten ermittelt, wobei die Schätzereinheit die Parameter des Signalmodells der Zwischenkreisenergiewerte unter Ermittlung jeweils einer Zustands-Zwischenkreisenergiewerte der positiv-seitigen und die negativ-seitigen Drehspannungsquelle des Umrichters darstellenden Gleichgröße errechnet, und die Zustands-Zwischenkreisenergiewerte werden zusätzlich zu den Zustands-Stromwerten der Regelungseinheit zugeführt.

Erfindungsgemäß ist also zusätzlich zu der Beobachtereinheit eine Schätzereinheit vorhanden, mit der Zustands-Zwischenkreisenergiewerte in Form von Gleichgrößen mittels eines Signalmodells der Zwischenkreisenergiewerte ermittelt werden; die errechneten Zustands-Zwischenkreisenergiewerte werden zu einem Zustands-Zwischenkreisenergievektor zusammengefasst und zusätzlich zu dem Zustands-Stromvektor der Regelungseinheit zugeführt. Die Schätzereinheit modelliert also die Leistungshalbleiterzweige bzw. Phasenmodule bzw. schätzt den Energieinhalt der Phasenmodule. Auch Soll-Zwischenkreisenergiewerte werden zu einem Soll-Zwischenkreisenergievektor zusammengefasst.

Ausgangsseitig der Beobachtereinheit wird ein Satz von Zustands-Stromwerten $\hat{\underline{x}}(k)$ bereitgestellt, wobei die Zustands-Stromwerte $\hat{\underline{x}}(k)$ Zustands-Strommesswerten entsprechen, die frei von Störungs- und ggf. auch von Verzögerungseffekten sind. Die Zustands-Stromwerte $\hat{\underline{x}}(k)$ entsprechen mit anderen Worten unverzögerten bzw. ungestörten Strommesswerten des Umrichters und werden der Regelung zugeführt. Erfindungsgemäß sind daher hinsichtlich der Strom-Regelgrößen die Voraussetzungen für eine schnelle Regelung geschaffen, ohne dass diesbezüglich Instabilitäten zu befürchten sind.

Am Ausgang der Schätzereinheit stehen Zustands-Zwischenkreisenergien an, die aufgrund ihrer Bildung mittels Schätzung ebenfalls schnell generiert sind, so dass auch von den Zwischenkreisenergie-Regelgrößen kein langsames Regelverhalten verursacht wird.

Auf diese Weise lässt sich mit dieser Fortbildung des erfindungsgemäßen Verfahrens die Regelung des Umrichters auf der Basis einer ganzheitlichen Betrachtung mit gleichzeitiger Berücksichtigung aller regelungsrelevanten Regelgrößen unter Erzielung eines optimalen Regelverhaltens durchführen, wozu insbesondere auch eine schnell ablaufende Regelung gehört.

Bei dem erfindungsgemäßen Verfahren werden in vorteilhafter Weise die Zustands-Zwischenkreisenergiewerte der Leistungshalbleiterventilzweige der positiv-seitigen und der negativ-seitigen Drehspannungsquelle des Umrichters jeweils für sich erfasst; mittels jeweils eines Parameter-Schätzers der Schätzereinheit werden die Parameter eines Signalmodells der Zwischenenergiewerte errechnet, und es werden die jeweils einen Gleichanteil beschreibenden Parameter der positiv-seitigen und der negativ-seitigen Leistungshalbleiterventilzweige jeweils für sich unter Bildung der Zustands-Zwischenkreisenergiewerte weiterverarbeitet.

Bevorzugt werden Parameter-Schätzer mit rekursivem Algorithmus verwendet. Zu derartigen Algorithmen gehören der rekursive Least-Square-Altorithmus, der rekursive erweiterte Least-Square-Algorithmus, die rekursive Methode der Hilfsvariablen (instrumental variables), die rekursive Prediction-error-Methode und die rekursive Maximum-Likelihood-Methode bzw. Algorithmus.

Als vorteilhaft wird es ferner angesehen, wenn zur Ermittlung des Gleichanteils der Zwischenkreisenergiewerte als Schätzer ein Parameter-Schätzer mit einem Schwingungsmodell $w(t)$ für die Zwischenkreisenergiewerte

$$w(t) = \text{A}_0 + \text{A}_{k1} * \cos(k\omega t) + \text{A}_{k2} * \sin(k\omega t) \quad \text{für } k=1 \text{ bis } n$$

verwendet wird,
in dem $A_0$ den Gleichanteil der Zwischenkreisenergiewerte und $A_{k1}$ und $A_{k2}$ weitere Parameter des Schwindungsmodells sowie $\omega$ die Kreisfrequenz eines mit dem Umrichter verbundenen Wechselspannungsnetzes angibt.

Der wesentliche Vorteil dieser Ausgestaltung des erfindungsgemäßen Verfahrens besteht darin, dass bei ihm der Gleichanteil der Zwischenkreisenergiewerte infolge des Einsatzes des Least-Square-Schätzers schnell ermittelt kann, was zu einem guten Regelverhalten des Umrichters insgesamt führt. Zur Regelung der Zwischenkreisenergie und zum Balancieren der Zweige des Umrichters ist nämlich der Gleichanteil erforderlich. Wird dieser Gleichanteil exakt und schnell bestimmt, dann ist dadurch auch das Regelverhalten des Umrichters insgesamt gut. Erfolgt die Regelung des Umrichters digital, was bevorzugt wird, dann lässt sich erfindungsgemäß erreichen, dass der Gleichanteil jeweils zum aktuellen Abtastzeitpunkt vorliegt oder sogar für den folgenden Abtastpunkt bereits vorausgeschätzt vorliegt.

Besonders schnell lässt sich der Gleichanteil der Zwischenkreisenergiewerte ermitteln, wenn als Schätzer ein Parameter-Schätzer mit einem Schwingungsmodell $w(t)$ für die Zwischenkreisenergiewerte

$$w(t) = \text{A}_0 + \text{A}_{11} * \cos(\omega t) + \text{A}_{12} * \sin(\omega t) + \text{A}_{21} * \cos(2\omega t) + \text{A}_{22} * \sin(2\omega t)$$

verwendet wird,
in dem $A_0$ den Gleichanteil der Zwischenkreisenergiewerte und $A_{11}$ bis $A_{22}$ weitere Parameter des Schwindungsmodells sowie $\omega$ die Kreisfrequenz eines mit dem Umrichter verbundenen Wechselspannungsnetzes angibt.

Bei dem erfindungsgemäßen Verfahren kann mit Parametern unterschiedlicher Art geschätzt werden. Dabei ist es zur Erzielung einer hohen Genauigkeit vorteilhaft, wenn ein Schwingungsmodell mit zeitabhängigen Parametern $A_0(t)$ bis $A_{22}(t)$ verwendet wird.

Zur Erzielung einer relativ einfach durchführbaren Schätzung ist es ferner vorteilhaft, wenn die Zeitabhängigkeit der Parameter durch eine lineare Funktion oder eine Exponentialfunktion vorgegeben wird.

Besonders einfach, jedoch ggf. unter Inkaufnahme einer größeren Ungenauigkeit lässt sich das erfindungsgemäße Verfahren mit einem Schwingungsmodell mit zeitlich konstanten Parametern $A_0$ bis $A_{22}$ durchführen. Stimmt das Modell gut mit dem wirklichen Signal überein, arbeitet das Verfahren auch mit dem einfachen Modell genau.

Im Rahmen der Erfindung können die Zustandsgrößen neben reinen Stromwerten auch Spannungen, insbesondere Stellspannungen, oder dergleichen oder andere Größen wie die Temperatur bestimmter Bauteile umfassen. Dabei entsprechen die Sollgrößen in jedem Fall den Zustands-Größen, da ein Vergleich, also die Differenzbildung zwischen diesen Größen, sonst nicht möglich wäre.

Besonders vorteilhaft lässt sich das erfindungsgemäße Verfahren durchführen, wenn als Umrichter ein Multilevel-Umrichter verwendet wird, der zu einer Brückenschaltung miteinander verbundene Leistungshalbleiterventilzweige aufweist, wobei jeder Leistungshalbleiterventilzweige aus einer Reihenschaltung von Submodulen besteht und jedes Submodul eine Schaltung von Leistungshalbleitern sowie eine parallel dazu angeordnete Kondensatoreinheit umfasst.

Der Erfindung liegt auch die Aufgabe zugrunde, eine Anordnung zum Regeln eines Umrichters, wie er aus der eingangs behandelten internationalen Anmeldung hervorgeht, oder allgemein eines selbstgeführten Umrichters so fort zu entwickeln, dass sie eine klare Regelungsstruktur aufweist und eine schnelle Regelung bei guter Stabilität der Regelung aufweist.

Zur Lösung dieser Aufgabe geht die Erfindung von einer Anordnung zum Regeln eines Umrichters aus mit einer Brückenschaltung von Phasenmodulzweigen mit jeweils einer Reihenschaltung von Submodulen mit jeweils einer Halbleiterschaltung mit angeschlossenem Kondensator, mit einer mit ihrem Eingang mit dem Messwerteausgang des Umrichters verbundenen Regelungseinheit, die an ihrem Ausgang Stellspannungswerte $\underline{u}(k)$ erzeugt, und einer der Regelungseinheit nachgeordneten Steuerelektronik, die in Abhängigkeit der Stellspannungswerte $\underline{u}(k)$ Steuersignale bereitstellt und an die Leistungshalbleiter des Umrichters überträgt. Erfindungsgemäß liegt zwischen dem Messwerteausgang des Umrichters und dem Eingang der Regelungseinheit (16) eine Beobachtereinheit, die die Zustandsistwerte $\hat{\underline{x}}(k)$ ausgehend von den Stellspannungswerten $\underline{u}(k)$ und unter Berücksichtigung von gemessenen Stromwerten $\underline{x}(k)$ berechnet, zwischen dem Messwerteausgang des Umrichters und dem Eingang der Regelungseinheit eine Schätzereinheit, die Zustandszwischenkreisenergieistwerte $\hat{\underline{w}}(k)$ unter Berücksichtigung von gemessenen Zwischenkreisenergiewerten $\underline{w}(k)$ der positiv-seitigen und der negativ-seitigen Drehspannungsquelle des Umrichters berechnet, wobei die Beobachtereinheit und die Schätzereinheit den Umrichter modellieren, so dass die berechneten Zustandsstromistwerte $\hat{\underline{x}}(k)$ und Zustandszwischenkreisenergieistwerte im eingeschwungenen Zustand den fehlerfreien Strom- und Zwischenkreisenergiewerten entsprechen, und die fehlerfreien Strom- und Zwischenkreisenergiewerte $\hat{\underline{x}}(k)$, $\hat{\underline{w}}(k)$ einer als periodischer Regler mit periodisch-zeitvarianter Verstärkung ausgebildeten Regelungseinheit zugeführt werden.

Vorteile dieser Anordnung sind vor allem eine gleichzeitige Berücksichtigung aller regelungsrelevanten Regelgrößen unter Erzielung eines optimalen Regelverhaltens mit schnell ablaufender Regelung.

Besonders vorteilhaft ist die Anordnung dann, wenn eine Beobachtereinheit mit einem periodisch-zeitvarianten Systemmodell verwendet wird, das ausgehend von der allgemeinen Zustandsgleichung

$$\underline{\dot{x}} = \underline{A} \cdot \underline{x} + \underline{B} \cdot \underline{u}$$

mit $\underline{x}$ als Zustandsvariable, $\underline{\dot{x}}$ als zeitlicher Ableitung der Zustandsvariablen, $\underline{A}$ als Systemmatrix, $\underline{B}$ als Eingangsmatrix und $\underline{u}$ als Eingangsvariable eine zeitinvariante Systemmatrix $\underline{A}_{PLTV}$ und eine zeitvariante Eingangsmatrix $\underline{B}_{PLTV}(t)$ aufweist mit

$$x_{PLTV} = \begin{pmatrix} \underline{x} \\ \underline{x}_{\alpha\beta} \\ \underline{x}_{dq^{-1}} \\ \underline{w}_{\alpha\beta} \\ \underline{w}_{dq^{-1}} \\ \underline{w} \end{pmatrix},$$

wobei $\underline{x}$ für den gemessenen park-transformierten Strom, $x_{\alpha\beta}$ für den alpha-beta-transformierten und $x_{dq-1}$ für den zweifach park-rücktransformierten gemessenen Strom (Gegensystem), $\underline{w}_{\alpha\beta}$ für die alpha-beta-transformierten, gemessenen Zwischenkreisenergiewertesummen von positiv-seitiger und negativ-seitiger Drehspannungsquelle und $\underline{w}_{dq-1}$ für die alpha-beta-transformierten, gemessenen Zwischenkreisenergiewertedifferenzen zwischen positiv- und negativ-seitiger Drehspannungsquelle und w für die gemessenen Zwischenkreisenergiewerte des gesamten Umrichters steht.

Bei einer weiteren Lösung der oben angegebenen Aufgabe liegt erfindungsgemäß zwischen dem Messwerteausgang des Umrichters und dem Eingang der Regelungseinheit eine Beobachtereinheit, die die Zustandsistwerte $\hat{\underline{x}}(k)$ ausgehend von den Stellspannungswerten $\underline{u}(k)$ und unter Berücksichtigung von gemessenen Stromwerten $\underline{x}(k)$ berechnet; zwischen dem Messwerteausgang des Umrichters und dem Eingang der Regelungseinheit liegt eine Schätzereinheit, die Zustandszwischenkreisenergieistwerte $\hat{\underline{w}}(k)$ unter Berücksichtigung von gemessenen Zwischenkreisenergiewerten $\underline{w}(k)$ der positiv-seitigen und der negativ-seitigen Drehspannungsquelle des Umrichters berechnet, wobei die Beobachtereinheit und die Schätzereinheit den Umrichter modellieren, so dass die berechneten Zustandsstromistwerte $\hat{\underline{x}}(k)$ und Zustandszwischenkreisenergiewerte der Gesamtenergie des Umrichters und der Differenz der Zwischenkreisenergiewerte $\underline{w}(k)$ der positiv-seitigen und der negativ-seitigen Drehspannungsquelle des Umrichters im eingeschwungenen Zustand den fehlerfreien Strom- und Zwischenkreisenergiewerten entsprechen, und die fehlerfreien Strom-$\hat{\underline{x}}(k)$ und Zwischenkreisenergiewerte $\hat{\underline{x}}(k)$ einer als periodischer Regler mit periodisch-zeitvarianter Verstärkung ausgebildeten Regelungseinheit zugeführt werden.

Vorteile dieser Anordnung sind ebenfalls vor allem eine gleichzeitige Berücksichtigung aller regelungsrelevanten Regelgrößen unter Erzielung eines optimalen Regelverhaltens mit schnell ablaufender Regelung.

Mit besonderem Vorteil weist bei der erfindungsgemäßen Anordnung eine ausgangsseitig mit einer dem periodischen Regler vorgeordneten Summierschaltung verbundene periodische Vorsteuereinheit eine der Periode des Wechselstroms entsprechende Periode auf.

Ferner wird es als vorteilhaft angesehen wenn, der periodische Regler so ausgebildet ist, dass seine periodische-zeitvariante Verstärkung mittels periodischen Umschaltens seiner Reglermatrizen erfolgt.

Bevorzugt ist die Beobachtereinheit der erfindungsgemäßen Anordnung so ausgestattet, dass sie Zustandsistwerte $\hat{\underline{x}}(k)$ ausgehend von den Stellspannungswerten $\underline{u}(k)$ und Zustandsmesswerten $\underline{y}_d(k)$ unter Berücksichtigung von Störeffekten und/oder Verzögerungseffekten derart berechnet, dass die Zustandsistwerte $\hat{\underline{x}}(k)$ von Störungseffekte befreiten und/oder ungestörten Strommesswerten im eingeschwungenen Zustand entsprechen.

Bei der erfindungsgemäßen Anordnung ist bevorzugt an den Ausgang des Umrichters eine das Signalmodell von Zwischenkreisenergiewerten ($w(k)$) nachbildende Schätzereinheit angeschlossen, und die Beobachtereinheit und die Schätzereinheit sind ausgangsseitig mit Ist-Eingängen der Regelungseinheit verbunden.

Bei einer besonders vorteilhaften Ausführungsform der erfindungsgemäßen Anordnung ist der Umrichter ein Multilevel-Umrichter, der zu einer Brückenschaltung miteinander verbundene Leistungshalbleiterventilzweige aufweist, wobei jeder Leistungshalbleiterventilzweig aus einer Reihenschaltung von Submodulen besteht und jedes Submodul eine Schaltung von Leistungshalbleitern sowie eine parallel dazu angeordnete Kondensatoreinheit umfasst.

Die Erfindung und deren Vorteile werden nachfolgend anhand von Ausführungsbeispielen der Erfindung unter Bezug auf die Figuren der Zeichnung beschrieben, wobei gleiche Bezugszeichen auf gleiche Bauteile verweisen und wobei

Figuren 1 bis 3     eine schematische Darstellung eines beispielhaften Umrichters, der mit dem erfindungsgemäßen Verfahren geregelt wird,

Figur 4     ein Ausführungsbeispiel einer Anordnung zur Durchführung des erfindungsgemäßen Verfahrens in prinzipieller Darstellung

Figur 5     dasselbe Ausführungsbeispiel in detaillierter Darstellung

Figur 6     ein Ausführungsbeispiel einer bevorzugt eingesetzten Schätzereinheit mit nachgeordneter Aufbereitungseinheit,

Figur 7     ein Ausführungsbeispiel einer alternativen Aufarbeitungseinheit und

Figur 8     eine alternative Ausgestaltung des Eingangsteils der Anordnung gemäß der Figur 4

zeigt.

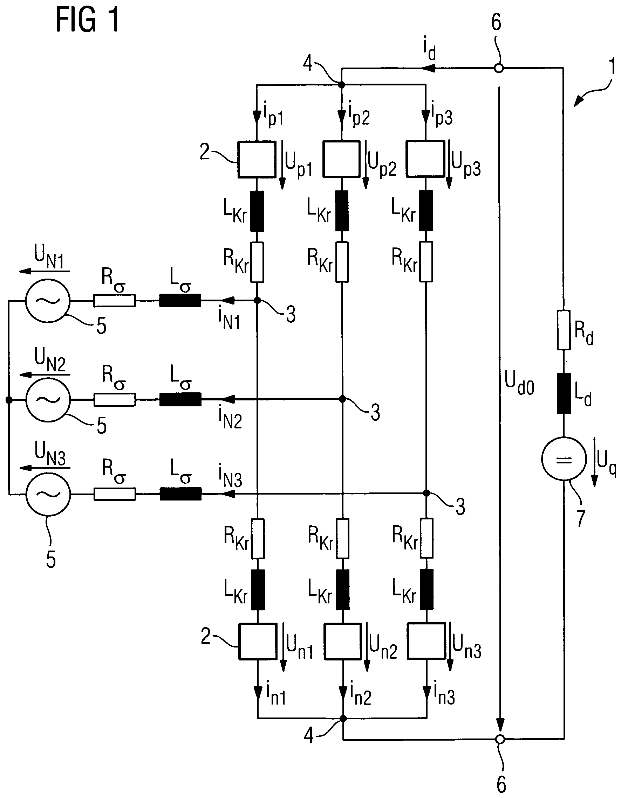

Figur 1 zeigt schematisch den Aufbau eines zu regelnden Umrichters 1, der zum Anschluss an ein in Figur 1 figürlich nicht dargestelltes Wechselstromnetz vorgesehen ist. Der Umrichter 1 verfügt über sechs Leistungshalbleiterventilzweige 2, die zu einer Sechs-Puls-Brückenschaltung miteinander verschaltet sind. Dabei erstreckt sich jeder Leistungshalbleiterventilzweig 2 zwischen einem Wechselspannungsanschluss 3 sowie einem Gleichspannungsanschluss 4. Jeder Wechselspannungsanschluss 3 ist mit einer Sekundärwicklung 5 eines figürlich nicht vollständig dargestellten Transformators verbunden, wobei die Sekundärwicklungen 5 zu einem Stern miteinander verschaltet sind. An den Sekundärwicklungen 5 fallen die Spannungen $u_{N1}$, $u_{N2}$ und $u_{N3}$ ab. Zwischen dem Wechselspannungsanschluss 3 und der Sekundärwicklung 5 sind ferner in jeder Phase ein Ohmscher Widerstand $R_\sigma$ und eine Induktivität $L_\sigma$ angeordnet, wobei die Netzströme $i_{N1}$, $i_{N2}$ und $i_{N3}$ fließen. Ferner sind Induktivitäten $L_{Kr}$ und Ohmsche Widerstände $R_{Kr}$ zwischen jedem Wechselspannungsanschluss und dem dazugehörigen Phasenmodul- bzw. Leistungshalbleiterventilzweig 2 angeordnet. Der durch den jeweiligen Leistungshalbleiterventilzweig 2 fließende Strom ist mit $i_{p1}$, $i_{p2}$, $i_{p3}$, $i_{n1}$, $i_{n2}$ und $i_{n3}$ bezeichnet. Die an den Leistungshalbleiterventilzweigen 2 insgesamt abfallende Spannung ist mit $u_{p1}$, $u_{p2}$, $u_{p3}$ sowie $u_{n1}$, $u_{n2}$ und $u_{n3}$. Die Gleichspannungsanschlüsse 4 sind Teil eines Gleichspannungskreises 6, in dem ein Gleichstrom $i_d$ fließt.

Der in Figur 1 oben dargestellte positive Pol des Gleichspannungskreises 6 ist mit dem unten dargestellten negativen Pol über einen Ohmschen Widerstand $R_D$, eine Induktivität $L_D$ sowie eine schematisch angedeutete Spannungsquelle 7 verbunden. Die zwischen dem positiven Pol und dem negativen Pol des Gleichspannungskreises 6 abfallende Spannung ist $U_{d0}$, die an der Spannungsquelle 7 abfallende Spannung $U_q$.

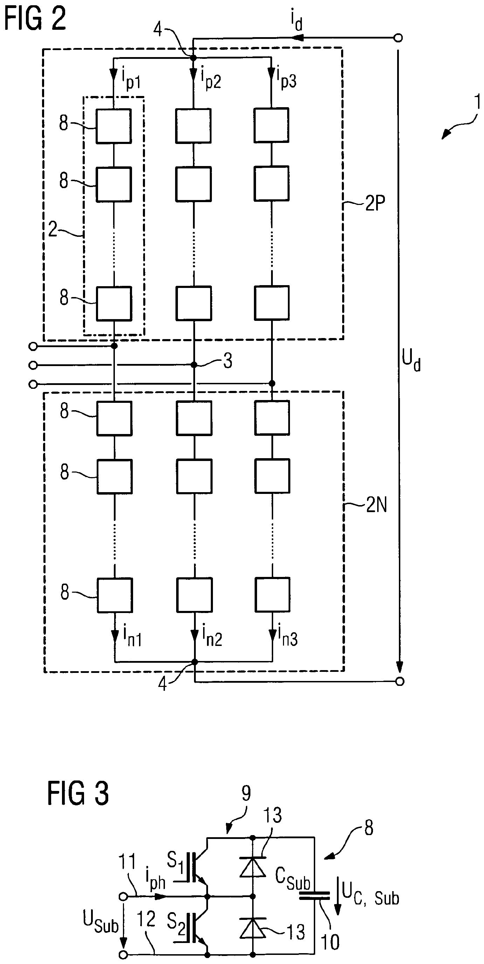

In Figur 2 ist der Aufbau der Leistungshalbleiterventilzweige 2 genauer dargestellt. Es ist erkennbar, dass jeder Leistungshalbleiterventilzweig 2 eine Reihenschaltung von Submodulen 8 aufweist, deren Aufbau in Figur 3 verdeutlicht ist. Es ist erkennbar, dass jedes Submodul 8 über eine Leistungshalbleiterschaltung 9 verfügt, die mit einem Submodulkondensator 10 verbunden ist, so dass an Ausgangsklemmen 11 und 12 jedes Submoduls 8 entweder die an dem Submodulkondensator 10 abfallende Spannung $u_{C,Sub}$ oder aber eine Nullspannung erzeugbar ist. Dazu weist die Leistungshalbleiterschaltung 9 zwei abschaltbare Leistungshalbleiter S1 und S2 auf, die für hohe Spannungen ausgelegt und beispielsweise als IGBT, GTO oder dergleichen realisiert sind. Jedem abschaltbaren Leistungshalbleiter S1 beziehungsweise S2 ist eine Freilaufdiode 13 gegensinnig parallel geschaltet.

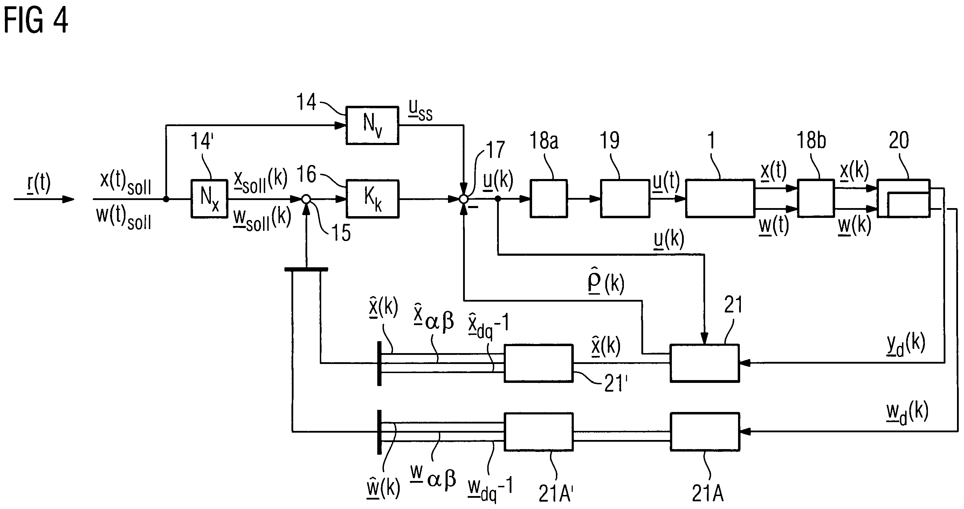

Figur 4 zeigt ein Ausführungsbeispiel des erfindungsgemäßen Verfahrens zum Regeln eines Umrichters gemäß der Figuren 1 bis 3. Wie bei Regelungen allgemein üblich, werden auch hier Sollwerte mit Istwerten verglichen oder mit anderen Worten die Differenz zwischen einem Sollwert und einem Istwert gebildet, wobei anschließend die auf diese Weise gewonnene Regeldifferenz einer Regelungseinheit 16 zugeführt wird, der in den dargestellten Ausführungsbeispielen eine Vorsteuereinheit 14 und eine Abbildungseinheit 14' zugeordnet sind. Die Regelgrößen des in Figur 1 gezeigten Umrichters sind die im Umrichter 1 fließenden Ströme. Hierbei ist es jedoch ausreichend, lediglich fünf Ströme zu betrachten, da sich die übrigen in Figur 1 gezeigten Ströme aus den bekannten fünf Strömen berechnen lassen. Sämtliche Strom-Regelgrößen werden erfindungsgemäß in einem Zustandsvektor $\hat{\underline{x}}(k)$ zusammengefasst; entsprechendes gilt hinsichtlich Zwischenkreisenergie-Regelgrößen, die in einem Zustandsvektor $\hat{\underline{w}}(k)$ zusammengefasst sind. Entsprechendes gilt für die Sollgrößen $\underline{r}(t)$, die hinsichtlich der Ströme mit den Sollwerten $\underline{x}_{soll}(t)$ und bezüglich der Zwischenkreisenergien mit den Sollwerten $\underline{w}_{soll}(t)$ vorgegeben sind. Die Sollwerte $\underline{x}_{soll}(t)$ werden zum einen der Vorsteuereinheit 14 zugeführt, welche die Sollwerte $\underline{x}_{soll}(t)$ auf stationäre Stellspannungen $\underline{u}_{ss}(k)$ abbildet. In der Abbildungseinheit 14' werden aus den Zwischenkreisenergiesollwerten $\underline{w}_{Soll}(t)$ Zustandssollwerte $\underline{w}_{Soll}(k)$ gebildet. Mit Hilfe der Addiereinheit 15 wird die Differenz zwischen den Sollwerten $\underline{x}_{Soll}(k)$ und $\underline{w}_{Soll}(k)$ und Zustandsstromistwerten $\hat{\underline{x}}(k)$, und Zustandszwischenkreisenergieistwerten $\hat{\underline{w}}(k)$ gebildet, wobei Regeldifferenzwerte erzeugt werden, die der Regelungseinheit 16 zugeführt werden. Ausgangsseitig stellt die Regelungseinheit 16 Stellspannungen für Leistungshalbleiterventilzweige 2 des Umrichters 1 gemäß Figur 1 bereit. Zu diesen Stellspannungen werden die stationären Stellspannungen $u_{ss}(k)$ mittels eines Addierers 17 hinzuaddiert und ein Störungsistvektor $\hat{\underline{\rho}}(k)$ subtrahiert, wobei in einem Abtastschritt k der Stellspannungsvektor $\underline{u}(k)$ erzeugt wird. Die Stellspannungen des Stellspannungsvektors $\underline{u}(k)$ werden nun mit Hilfe eines Digital/Analogwandlers 18a in analoge Stellspannungen $\underline{u}(t)$ umgewandelt und schließlich einer Steuerelektronik 19 zugeführt, welche in Abhängigkeit der jeweiligen Stellspannung $\underline{u}(k)$ Steuersignale für die Leistungshalbleiter S1, S2 eines jeden Leistungshalbleiterventilzweiges 2 erzeugt (vgl. Figuren 1 und 3). Die Steuersignale werden schließlich dem Umrichter 1 zugeführt, woraufhin sich die gewünschten Ströme und Zwischenkreisenergien einstellen, die wiederum durch den Zustandsvektor $\underline{x}(t)$ bzw. $\underline{w}(t)$ symbolisiert sind. Die Umrichterströme werden mittels nicht dargestellter Sensoren gemessen, beispielsweise mit Hilfe von Stromwandlern, wobei der Analog/Digitalwandler 18b das gemessene Signal des jeweiligen Stromwandlers abgetastet und die dabei gewonnen Abtastwerte digitalisiert, so dass sich zum Abtastzeitpunkt k an den Ausgängen des Analog/Digital-Wandlers 18b die Zustandsvektoren $\underline{x}(k)$ und $\underline{w}(k)$ ergeben, die beispielsweise fünf unterschiedliche Ströme und Zwischenkreisenergien umfassen, so dass der Umrichter 1 vollständig charakterisiert ist.

In Figur 4 ist ferner eine Störungseinheit 20 gezeigt, die in Form eines Ersatzschaltbildes berücksichtigt, dass die erfassten Strommesswerte mit Störungen behaftet sind. $\underline{y}_d(k)$ repräsentiert daher einen Zustandsvektor mit gestörten Strommesswerten. Dieser Zustandsvektor $\underline{y}_d(k)$ wird einer Beobachtereinheit 21 zugeführt, die als zweites Eingangssignal die Stellspannungen $\underline{u}(k)$ erhält. Die Beobachtereinheit 21, auf die später noch genauer eingegangen werden wird, prädiziert mit Hilfe eines mathematischen Modells des Umrichters 1, das Störungen berücksichtigt, ungestörte Stromistwerte $\hat{\underline{x}}(k)$ und stellt diese ausgangsseitig bereit. Der Regelungseinheit 16 werden dann über einen der Beobachtereinheit 21 nachgeordneten Transformationsbaustein 21' die ungestörten Stromistwerte $\hat{\underline{x}}(k)$ zur Verfügung gestellt.

Die Beobachtereinheit 21 erzeugt an ihrem Ausgang ferner Störungsistwerte $\hat{\underline{\rho}}(k)$, die in dem Addierer 17 in der Weise verarbeitet werden, dass sie subtrahiert werden.

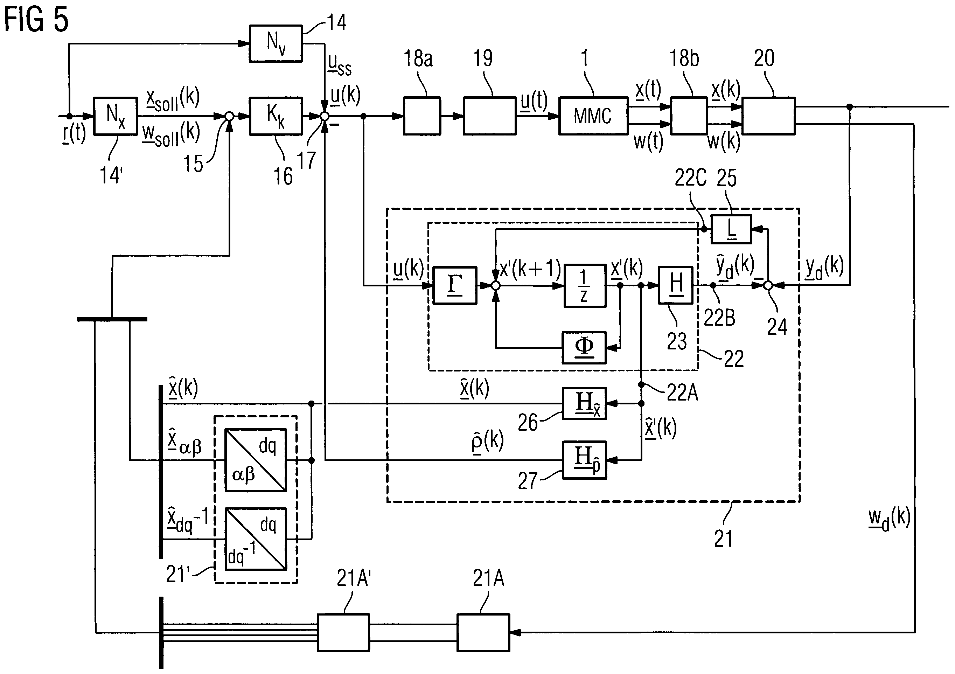

Figur 5 verdeutlicht das Ausführungsbeispiel gemäß Figur 4 detailliert.

Es ist zu erkennen, dass die Beobachtereinheit 21 eine Modelleinheit 22 aufweist, mit deren Hilfe der Umrichter 1 modelliert wird. An einem Ausgang 22A der Modelleinheit 22 wird ein Vektor $\hat{\underline{x}}'(k)$ bereitstellt, der sowohl die ungestörten Stromistwerte $\hat{\underline{x}}(k)$ als auch mit Störungen behaftete Strommodellmesswerte umfasst. An einem weiteren Ausgang 22B der Modelleinheit 22 treten Strommodellmesswerte $\hat{\underline{y}}_d(k)$ auf, die real gemessenen Strommesswerten $\underline{y}_d(k)$ entsprechen. Dabei schneidet die Einheit 23 aus dem Vektor $\hat{\underline{x}}'(k)$ nur die gestörten Strommodellmesswerte $\hat{\underline{y}}_d(k)$ heraus. Diese Strommodellmesswerte $\hat{\underline{y}}_d(k)$ werden dann durch einen Addierer 24 von den real gemessenen mit Störungen behafteten Messwerten $\underline{y}_d(k)$ abgezogen. Die auf diese Weise gewonnene Modellmesswertabweichung wird schließlich einer Rückführungseinheit 25 zugeführt, welche eine Verstärkungs- oder Rückführungsmatrix $\underline{L}$ auf den Vektor der Modellmesswertabweichung anwendet. Hierdurch werden die Modellmesswertabweichungen verstärkt. Die verstärkten Modellmesswertabweichungen werden der Modelleinheit 22 schließlich an einem Eingang 22C zugeführt, wobei die Rückführung so erfolgt, dass $\hat{\underline{y}}_d(k)$ und $\underline{y}_d(k)$ konvergieren. Mit anderen Worten erfolgt die Modellierung des Umrichters so, dass die Modellmesswertabweichung minimal wird.

Zum Herausschneiden der unverzögerten Stromistwerte $\hat{\underline{x}}(k)$ aus dem auch verzögerte Messwerte umfassenden Zustandsvektor $\hat{\underline{x}}'(k)$ als Ausgang der Modelleinheit 22 ist eine Einheit 26 vorgesehen. Der Ausgang der Einheit 26 $\hat{\underline{x}}'(k)$ wird dem Addierer 15 zugeführt und somit der weiteren Regelung zugrunde gelegt.

Aus dem Zustandsvektor $\hat{x}'(k)$ werden mittels einer weiteren Einheit 27 auch Störungsistwerte $\hat{\rho}(k)$ ausgeschnitten und dem Addierer 17 so zugeführt, dass dort eine Subtraktion stattfindet.

Im Folgenden wird auf das verwendete mathematische Modell eingegangen. Zur Modellierung von Störungen muss der Zustandsvektor, also der Vektor mit den ungestörten Stromistwerten, um die Störungen erweitert werden.

Dabei wird zunächst die herkömmliche Zustandsgleichung um eine Störung $\underline{v}$ erweitert, welche über die Eingangsmatrix $\underline{B}$ auf den Eingang im System wirkt. Es gilt:

$$\dot{\underline{x}} = \underline{A}\underline{x} + \underline{B}\underline{u} + \underline{B}\underline{v} \qquad (1)$$

in der $x$ die Zustandsvariable und $A$ die Systemmatrix bezeichnen.

Zusätzlich soll das System stationär genau einer konstanten Sollgröße $\underline{r}$ folgen (vgl. Fig. 5). Für den Regelfehler $\underline{e}$ lässt sich dann die folgende Gleichung

$$\underline{e} = \underline{H}\underline{x} - \underline{r} \qquad (2)$$

aufstellen, in der $\underline{H}$ die Ausgangsmatrix des Systems bei diskretisierter Betrachtung bezeichnet. Um einen Beobachter für die Störgrößen entwerfen zu können, ist ein mathematisches Modell der Störung nötig. Eine konstante Störung $\underline{v}$ lässt sich problemlos durch die Gleichung (3) und die Sollgröße $\underline{r}$ durch (4) beschreiben.

$$\dot{\underline{v}} = 0 \qquad (3)$$

$$\dot{\underline{r}} = 0 \qquad (4)$$

Dabei ist die Gleichung (3) in ihrer Aussage identisch mit der Angabe der Systemmatrizen:

$$\underline{A} = 0 \qquad \underline{B} = 0 \qquad \underline{C} = 1 \qquad (5)$$

Wenn nun $\underline{v}$ und $\underline{r}$ die gleiche Gleichung erfüllen wie im obigen Fall, so kann für das System ein äquivalentes Eingangssignal $\underline{\rho}$ gefunden werden, welches ebenfalls die Gleichung erfüllt. Es ergibt sich:

$$\dot{x} = \underline{A}\underline{x} + \underline{B}\left(\underline{u} + \underline{\rho}\right) \qquad (6)$$

und

$$\underline{e} = \underline{H}\underline{x} \qquad (7)$$

Nun wird der Zustandsvektor $\underline{x}$ um $\underline{\rho}$ zu

$$\underline{x}_{\rho} = \begin{pmatrix} \rho \\ \underline{x} \end{pmatrix} \qquad (8)$$

erweitert, wobei für $\underline{\rho}$ gilt:

$$\dot{\underline{\rho}} = 0 \qquad (9)$$

Komplizierter ist die Situation, wenn für die Modelleinheit 22 ein Störgrößenmodell für das Mit-, Gegen- und Nullsystem entworfen werden soll, um Gleichstromasymmetrien beziehungsweise Gleichkomponenten auszuregeln. Bekanntermaßen erscheinen diese Gleich-Störgrößen als Störungen einfacher und doppelter Netzfrequenz nach einer Park-Transformation.

Also wird zur Beobachtung dieser Störungen ein entsprechendes Modell benötigt. Wie weiter oben beschrieben, gilt für die Modellierung des äquivalenten Eingangssignals $\rho$ das gleiche Modell. Es werden dann zum einen Störungen dieser Signalform stationär genau ausgeregelt, zum anderen werden Sollwerte dieser Signalform stationär genau eingeregelt. Das Schwingungsmodell für die Grundkreisfrequenz $\omega_0$ lautet im Zustandsraum:

$$\underline{A}_{\omega 0} = \begin{pmatrix} 0 & 1 \\ -\omega_0^2 & 0 \end{pmatrix}, \quad \underline{B}_{\omega_0} = \begin{pmatrix} 0 \\ 0 \end{pmatrix}, \quad \underline{C}_{\omega_0} = \begin{pmatrix} 1 & 0 \end{pmatrix} \tag{10}$$

Die Eingangsmatrix $\underline{B}_{\omega_0}$ ist Null, weil die Störung nicht beeinflusst werden kann, also nicht steuerbar ist. Nun lässt sich ein Modell für den Beobachterentwurf aufstellen:

$$\dot{\underline{x}}_\rho = \underline{A}_\rho \underline{x}_\rho + \underline{B}_\rho \underline{u}, \quad \underline{e} = \underline{C} \underline{x}_\rho \tag{11}$$

Dabei gilt:

$$\underline{x}_\rho = \begin{pmatrix} \rho \\ \underline{x} \end{pmatrix}, \quad \underline{\rho} = \begin{pmatrix} \rho \\ \dot{\rho} \end{pmatrix} \tag{12}$$

Danach werden die Systemmatrizen aufgestellt, welche das System- und Störgrößenmodell enthalten:

$$\underline{A}_\rho = \begin{pmatrix} 0 & 1 & \underline{0} \\ -\omega_0^2 & 0 & \underline{0} \\ \underline{B} & \underline{0} & \underline{A} \end{pmatrix}, \quad \underline{B}_\rho = \begin{pmatrix} 0 \\ 0 \\ \underline{B} \end{pmatrix}, \quad \underline{C}_\rho = \begin{pmatrix} 0 & 0 & \underline{C} \end{pmatrix} \tag{13}$$

Nun erweitert man das Modell auf alle Frequenzbereiche. Für $\rho$ wird angenommen:

$$\underline{\rho} = \begin{pmatrix} \bar{\rho} \\ \rho_{\omega_0} \\ \rho_{2_{\omega_0}} \\ \dot{\rho}_{\omega_0} \\ \dot{\rho}_{2\omega_0} \end{pmatrix} \tag{14}$$

Für die erweiterten Systemmodellmatrizen gilt dann:

$$\underline{A}_\rho = \begin{pmatrix} 0 & 0 & 0 & 0 & 0 & \underline{0} \\ 0 & 0 & 0 & 1 & 0 & \underline{0} \\ 0 & 0 & 0 & 0 & 1 & \underline{0} \\ 0 & -\omega_0^2 & 0 & 0 & 0 & \underline{0} \\ 0 & 0 & -4\omega_0^2 & 0 & 0 & \underline{0} \\ \underline{B} & \underline{B} & \underline{B} & \underline{0} & \underline{0} & \underline{A} \end{pmatrix}, \quad \underline{B}_\rho = \begin{pmatrix} 0 \\ 0 \\ 0 \\ 0 \\ 0 \\ \underline{B} \end{pmatrix}, \quad \underline{C}_\rho = \begin{pmatrix} 0 & 0 & 0 & 0 & 0 & \underline{C} \end{pmatrix}$$

$$\tag{15}$$

Das Modell aus Gleichung (15) kann für den hier behandelten Umrichter erweitert werden. Zunächst werden in $\underline{\rho}$ alle fünf Eingangsgrößen zusammengefasst:

$$\underline{\rho} = \begin{pmatrix} \overline{\underline{\rho}} \\ \underline{\rho}_{\omega_0} \\ \underline{\rho}_{2\omega_0} \\ \dot{\underline{\rho}}_{\omega_0} \\ \dot{\underline{\rho}}_{2\omega_0} \end{pmatrix} \tag{16}$$

Die Elemente von $\underline{\rho}$ enthalten dann jeweils noch mal fünf Elemente, stellvertretend für die Störungen auf den fünf Stellgrößen. Aus dem Systemmodell wird - mit "$\underline{I}$" als Einheitsmatrix:

$$\underline{A}_\rho = \begin{pmatrix} \underline{0} & \underline{0} & \underline{0} & \underline{0} & \underline{0} & \underline{0} \\ \underline{0} & \underline{0} & \underline{0} & \underline{I} & \underline{0} & \underline{0} \\ \underline{0} & \underline{0} & \underline{0} & \underline{0} & \underline{I} & \underline{0} \\ \underline{0} & \underline{\omega}_0 & \underline{0} & \underline{0} & \underline{0} & \underline{0} \\ \underline{0} & \underline{0} & \underline{\omega}_1 & \underline{0} & \underline{0} & \underline{0} \\ \underline{B} & \underline{B} & \underline{B} & \underline{0} & \underline{0} & \underline{A} \end{pmatrix}, \quad \underline{B}_\rho = \begin{pmatrix} \underline{0} \\ \underline{0} \\ \underline{0} \\ \underline{0} \\ \underline{0} \\ \underline{B} \end{pmatrix}, \quad \underline{C}_\rho = \begin{pmatrix} \underline{0} & \underline{0} & \underline{0} & \underline{0} & \underline{0} & \underline{C} \end{pmatrix} \tag{17}$$

wobei

$$\underline{\omega}_0 = -\omega_0^2 \cdot \underline{I} \quad \text{und} \quad \underline{\omega}_1 = -4\omega_0^2 \cdot \underline{I} \tag{18}$$

gelten.

Nach dem gleichen Prinzip können neben Mit- und Gegensystem auch Oberschwingungen durch Erweiterung des Störmodells kompensiert werden, wobei hier exemplarisch

$$\underline{\omega}_2 = -16 \cdot \omega_0^2 \cdot \underline{I}, \qquad \underline{\omega}_3 = -25\omega_0^2 \cdot \underline{I} \quad \text{und} \quad \underline{\omega}_4 = -36\omega_0^2 \cdot \underline{I} \tag{19}$$

betrachtet werden.

$$\underline{A}_\rho = \begin{pmatrix} \underline{0} & \underline{0} & \cdots & \underline{0} & \underline{0} & \cdots & \underline{0} & \underline{0} \\ \underline{0} & \underline{0} & \cdots & \underline{0} & \underline{I} & \cdots & \underline{0} & \underline{0} \\ \underline{0} & \underline{0} & \cdots & \underline{0} & \underline{0} & \ddots & \underline{0} & \underline{0} \\ \underline{0} & \underline{0} & \cdots & \underline{0} & \underline{0} & \cdots & \underline{I} & \underline{0} \\ \underline{0} & \underline{\omega}_0 & \cdots & \underline{0} & \underline{0} & \cdots & \underline{0} & \underline{0} \\ \underline{0} & \underline{0} & \ddots & \underline{0} & \underline{0} & \ddots & \underline{0} & \underline{0} \\ \underline{0} & \underline{0} & \cdots & \underline{\omega}_4 & \underline{0} & \cdots & \underline{0} & \underline{0} \\ \underline{B} & \underline{B} & \cdots & \underline{B} & \underline{0} & \cdots & \underline{0} & \underline{A} \end{pmatrix} \tag{20}$$

Dieses Modell kann nach bekannten Methoden diskretisiert werden, was hier aber im Detail nicht mehr aufgeführt wird, so dass man ein System $\underline{\Phi}_\rho$, $\underline{\Gamma}_\rho$, $\underline{H}_\rho$ mit zeitdiskreten Modellparametern erhält, die einer praktischen Verarbeitung in einer Datenverarbeitungsanlage zugänglich sind. Dabei entspricht der zeitdiskrete Modellparameter $\underline{\Phi}_\rho$ dem

kontinuierlichen Systemparameter $\underline{B}$, die zeitdiskrete Eingangsmatrix $\underline{\Gamma}_\rho$ der Eingangsmatrix $\underline{B}$ und der zeitdiskreten Ausgangsmatrix $\underline{H}_\rho$ der Ausgangsmatrix $\underline{C}$.

Zur Erläuterung des erfindungsgemäß weitergebildeten Verfahrens mit zusätzlicher Ausregelung von Verzögerungen wird nochmals Bezug genommen auf die Figur 4 und zunächst eine Situation angenommen, bei der einzig und allein Verzögerungen ausgeregelt werden sollen; in diesem Fall symbolisiert der Block 20 Verzögerungen, die sich unvermeidlich zwischen dem eigentlichen Messzeitpunkt der Ströme des Umrichters 1 und der Weiterverarbeitung und Übertragung der Strommesswerte ergeben. Diese Verzögerungen werden als Messverzögerungen oder Messtotzeiten bezeichnet. $\underline{y}_d(k)$ repräsentiert hier also dann einen Zustandsvektor mit verzögerten Strommesswerten. Die verzögerten Strommesswerte $\underline{y}_d(k)$ werden der Beobachtereinheit 21 zugeführt, die als zweites Eingangssignal die Stellspannungen $\underline{u}(k)$ erhält. Die Beobachtereinheit 21, auf die später noch genauer eingegangen werden wird, prädiziert mit Hilfe eines mathematischen Modells des Umrichters 1, das sowohl Stell- als auch die Messverzögerungen berücksichtigt, die unverzögerten Stromistwerte $\hat{\underline{x}}(k)$ und stellt diese ausgangsseitig bereit. Der Regelungseinheit 16 werden dann die unverzögerten Stromistwerte $\hat{\underline{x}}(k)$ zur Verfügung gestellt.

Unter Bezugnahme auf Figur 5 ergibt sich ferner, dass die Modelleinheit 22 einen Vektor $\hat{\underline{x}}'(k)$ bereitstellt, der sowohl die unverzögerten Stromistwerte $\hat{\underline{x}}(k)$, als auch Strommodellmesswerte umfasst, die den Stromistwerten entsprechen, jedoch mit Verzögerungen behaftet sind $\hat{\underline{y}}_d(k)$. Mit anderen Worten entsprechen Strommodellmesswerte $\hat{\underline{y}}_d(k)$ reell gemessenen Strommesswerten $\underline{y}_d(k)$. Die Einheit 23 schneidet aus dem Ausgang der Modelleinheit 22 nur die verzögerten Strommodellmesswerte $\hat{\underline{y}}_d(k)$ heraus, wobei die Strommodellmesswerte $\hat{\underline{y}}_d(k)$ durch den Addierer 24 von den real gemessenen mit Verzögerungen behafteten Messwerten $\underline{y}_d(k)$ abgezogen werden. Die auf diese Weise gewonnene Modellmesswertabweichung wird schließlich der Rückführungseinheit 25 zugeführt, welche eine Verstärkungs- oder Rückführungsmatrix $\underline{L}$ auf den Vektor der Modellmesswertabweichung anwendet. Hierdurch werden die Modellmesswertabweichungen verstärkt. Die verstärkten Modellmesswertabweichungen werden der Modelleinheit 22 schließlich als Eingang zugeführt, wobei die Rückführung so erfolgt, dass $\hat{\underline{y}}_d(k)$ und $\underline{y}_d(k)$ konvergieren. Mit anderen Worten erfolgt die Modellierung des Umrichters so, dass die Modellmesswertabweichung minimal wird.

Zum Herausschneiden der unverzögerten Stromistwerte $\hat{\underline{x}}(k)$ aus dem auch verzögerte Messwerte umfassenden Zustandsvektor $\hat{\underline{x}}'(k)$ als Ausgang der Modelleinheit 22 ist die Einheit 26 vorgesehen. Der Ausgang der Einheit 26 $\hat{\underline{x}}'(k)$ wird dem Addierer 15 zugeführt und somit der weiteren Regelung zugrunde gelegt.

Im Folgenden wird auf das verwendete mathematische Modell eingegangen. Zur Modellierung von Messverzögerungen muss der Zustandsvektor, also der Vektor mit den unverzögerten Stromistwerten, um die verzögerten Messwerte erweitet werden.

$$\hat{\underline{x}}'(k) = \begin{pmatrix} \hat{\underline{x}}(k) \\ \hat{\underline{y}}_{1d}(k) \\ \vdots \\ \hat{\underline{y}}_{nd}(k) \end{pmatrix} \qquad (21)$$

Sei $\hat{\underline{y}}_d(k)$ ein Vektor der verzögerten Messgrößen, so gilt für die Verzögerung von einem Abtastschritt:

$$\underline{y}_{1d}(k+1) = \underline{y}(k) \qquad (22)$$

Bei Verzögerungen von mehr als einem Abtastschritt gilt weiter

$$\underline{y}_{2d}(k+1) = \underline{y}_{1d}(k) \qquad (23$$

und

$$\underline{y}_d(k+1) = \underline{y}_{nd}(k) \qquad (24)$$

Hieraus lässt sich das allgemeine Modell ableiten:

$$\underline{x}(k+1) = \underline{\Phi}_d \, \underline{x}(k) + \underline{\Gamma}_d \, \underline{u}(k) \tag{25}$$

$$\underline{y}_d(k) = \underline{H}_d \, \underline{x}(k)$$

Weiterhin gelten - mit "I" wiederum als Einheitsmatrix:

$$\underline{\Phi}_d = \begin{pmatrix} \underline{\Phi} & \underline{0} & \dots & \underline{0} \\ \underline{H} & \underline{0} & \dots & \underline{0} \\ \underline{0} & \underline{I} & \dots & \underline{0} \\ \vdots & \dots & \ddots & \underline{0} \end{pmatrix} \tag{26}$$

$$\underline{\Gamma}_d = \begin{pmatrix} \underline{\Gamma} \\ \underline{0} \\ \vdots \\ \underline{0} \end{pmatrix}$$

$$\underline{H}_d = \begin{pmatrix} \underline{0} & \underline{0} & \dots & \underline{I} \end{pmatrix}$$

Somit steht ein Streckenmodell zur Verfügung, mit dessen Hilfe die Beobachtereinheit 21 entworfen werden kann.

Die Modelleinheit 22 der Beobachtereinheit 21 verwendet zur Modellierung des Umrichters 2 das oben genannte Streckenmodell gemäß

$$\hat{\underline{x}}'(k+1) = \underline{\Phi}\,\hat{\underline{x}}'(k) + \underline{\Gamma}\,\underline{u}(k) \tag{27}$$

Der Beobachtungsfehler kann nun definiert werden zu

$$\tilde{\underline{x}} = \underline{x} - \hat{\underline{x}}' \tag{28}$$

Damit die Strommodellmesswerte auch gegen die gemessenen realen Strommesswerte konvergieren, wird eine Rückführungsmatrix L eingeführt, so dass sich folgende Gleichung ergibt:

$$\hat{\underline{x}}'(k+1) = \underline{\Phi}\,\hat{\underline{x}}'(k) + \underline{\Gamma}\,\underline{u}(k) + \underline{L}\big(\underline{y}(k) - \underline{H}\,\hat{\underline{x}}'(k)\big) \tag{29}$$

Zum Entwurf der Rückführungsmatrix muss die Fehlergleichung

$$\tilde{\underline{x}}(k+1) = \big(\underline{\Phi} - \underline{L}\underline{H}\big)\tilde{\underline{x}}(k) \tag{30}$$

betrachtet werden, wobei die Dynamik $(\underline{\Phi}\text{-}\underline{L}\underline{H})$ so gewählt wird, dass die Strommodellmesswerte $\hat{\underline{y}}_d(k)$ auch gegen die gemessenen Messwerte $\underline{y}_d(k)$ konvergieren, und zwar schneller als die Streckendynamik.

Zur Modellierung von Stellverzögerungen, die von der Steuerelektronik 19 erzeugt werden wird folgendes System angewandt:

$$\underline{x}(k+1) = \underline{\Phi}\,\underline{x}(k) + \underline{\Gamma}_0\,u\big(k-(l-1)\big) + \underline{\Gamma}_1\,\underline{u}(k-1). \tag{31}$$

Für die Stellverzögerung r gilt

$$\tau = (l-1)\cdot T + \tau' \qquad (32)$$

Die Systemmatrizen lauten:

$$\underline{\Phi} = e^{\underline{A}T}$$

$$\underline{\Gamma}_0 = \int_0^{h-\tau'} e^{\underline{A}s}\, ds\, \underline{B} \qquad (33)$$

$$\underline{\Gamma}_1 = e^{\underline{A}(T-\tau')} \int_0^{\tau'} e^{\underline{A}s}\, ds\, \underline{B}$$

$$
\begin{pmatrix}
\underline{x}(k+1) \\
\underline{u}(k-(l-1)) \\
\underline{u}(k-(l-2)) \\
\underline{u}(k-1) \\
\underline{u}(k)
\end{pmatrix}
=
\begin{pmatrix}
\underline{\Phi} & \underline{\Gamma}_1 & \underline{\Gamma}_0 & \underline{0} & \underline{0} \\
\underline{0} & \underline{0} & \underline{I} & \underline{0} & \underline{0} \\
\underline{0} & \underline{0} & \underline{0} & \underline{I} & \underline{0} \\
\underline{0} & \underline{0} & \underline{0} & \underline{0} & \underline{I} \\
\underline{0} & \underline{0} & \underline{0} & \underline{0} & \underline{0}
\end{pmatrix}
\begin{pmatrix}
\underline{x}(k) \\
\underline{u}(k-1) \\
\underline{u}(k-3) \\
\underline{u}(k-2) \\
\underline{u}(k-1)
\end{pmatrix}
+
\begin{pmatrix}
\underline{0} \\
\underline{0} \\
\underline{0} \\
\underline{0} \\
\underline{I}
\end{pmatrix}
\underline{u}(k)
$$

Der Umrichter kann vollständig mit Mess- und Stellverzögerungen modelliert werden, indem man die oben gezeigten Modellierungen kombiniert. Es ergibt sich als direkte Darstellung der Differenzgleichung des modellierten Systems:

$$\underline{x}_\tau^d(k+1) = \underline{\Phi}_\tau^d\, \underline{x}_\tau^d(k) + \underline{\Gamma}_\tau^d\, u(k) \qquad (34)$$

$$\underline{y}_d(k) = \underline{H}_\tau^d\, \underline{x}_\tau^d(k)$$

Die Systemmatrizen werden hier beispielhaft für eine Messverzögerung d in Abtastschritten und eine Stellverzögerung von $\tau = (l\text{-}1)\cdot T + \tau'$ erstellt, wobei auch Stellverzögerungen, die nichtganzzahlige Vielfache von T sind.

$$\underline{\Phi}_\tau^d = \begin{pmatrix} \underline{\Phi} & \underline{0} & \underline{0} & \cdots & \underline{0} & \underline{\Gamma}_1 & \underline{\Gamma}_0 & \cdots & \underline{0} \\ \underline{H} & \underline{0} & \underline{0} & \cdots & \underline{0} & \underline{0} & \underline{0} & \cdots & \underline{0} \\ \underline{0} & \underline{I} & \underline{0} & \cdots & \underline{0} & \underline{0} & \underline{0} & \cdots & \underline{0} \\ \underline{0} & \underline{0} & \underline{I} & \cdots & \underline{0} & \underline{0} & \underline{0} & \cdots & \underline{0} \\ \vdots & \vdots & \vdots & \ddots & \vdots & \vdots & \vdots & \ddots & \vdots \\ \underline{0} & \underline{0} & \underline{0} & \cdots & \underline{I} & \underline{0} & \underline{0} & \cdots & \underline{0} \\ \underline{0} & \underline{0} & \underline{0} & \cdots & \underline{0} & \underline{0} & \underline{I} & \cdots & \underline{0} \\ \vdots & \vdots & \vdots & \cdots & \vdots & \vdots & \vdots & \ddots & \vdots \\ \underline{0} & \underline{0} & \underline{0} & \cdots & \underline{0} & \underline{0} & \underline{0} & \cdots & \underline{I} \\ \underline{0} & \underline{0} & \underline{0} & \cdots & \underline{0} & \underline{0} & \underline{0} & \cdots & \underline{0} \end{pmatrix} \tag{35}$$

$$\underline{x}_\tau^d = \begin{pmatrix} \underline{\hat{x}}(k) \\ \underline{y}(k) \\ \underline{y}(k-1) \\ \vdots \\ \underline{y}(k-d) \\ \underline{u}(k-l+1) \\ \vdots \\ \underline{u}(k-1) \\ \underline{u}(k) \end{pmatrix}$$

$$\underline{\Gamma}_\tau^d = \begin{pmatrix} \underline{0} \\ \underline{0} \\ \underline{0} \\ \vdots \\ \underline{0} \\ \underline{0} \\ \vdots \\ \underline{0} \\ \underline{I} \end{pmatrix} \tag{36)}$$

$$\underline{H}_\tau^d = \begin{pmatrix} \underline{0} & \underline{0} & \underline{0} & \cdots & \underline{I} & \underline{0} & \cdots & \underline{0} \end{pmatrix}$$

Für den mehrstufigen Umrichter gemäß Figur 1 wird l=2 und d=4 angenommen. Es ergeben sich dann folgende Matrizen:

$$\underline{\Phi}_{MMC} = \begin{pmatrix} \underline{\Phi} & \underline{0} & \underline{0} & \underline{0} & \underline{0} & \underline{\Gamma}_1 & \underline{\Gamma}_0 \\ \underline{H} & \underline{0} & \underline{0} & \underline{0} & \underline{0} & \underline{0} & \underline{0} \\ \underline{0} & \underline{I} & \underline{0} & \underline{0} & \underline{0} & \underline{0} & \underline{0} \\ \underline{0} & \underline{0} & \underline{I} & \underline{0} & \underline{0} & \underline{0} & \underline{0} \\ \underline{0} & \underline{0} & \underline{0} & \underline{I} & \underline{0} & \underline{0} & \underline{0} \\ \underline{0} & \underline{0} & \underline{0} & \underline{0} & \underline{0} & \underline{0} & \underline{I} \\ \underline{0} & \underline{0} & \underline{0} & \underline{0} & \underline{0} & \underline{0} & \underline{0} \end{pmatrix}$$

$$\underline{\hat{x}}'_{MMC} = \begin{pmatrix} \underline{\hat{x}}(k) \\ \underline{y}(k) \\ \underline{y}(k-1) \\ \underline{y}(k-2) \\ \underline{y}(k-3) \\ \underline{u}(k-1) \\ \underline{u}(k) \end{pmatrix} \tag{37}$$

$$\underline{\Gamma}_{MMC} = \begin{pmatrix} \underline{0} \\ \underline{0} \\ \underline{0} \\ \underline{0} \\ \underline{0} \\ \underline{0} \\ \underline{I} \end{pmatrix}$$

$$\underline{H}_{MMC} = \begin{pmatrix} \underline{0} & \underline{0} & \underline{0} & \underline{0} & \underline{I} & \underline{0} & \underline{0} \end{pmatrix}$$

Mit der auf dieser Weise möglichen Modellierung des Umrichters können die unverzögerten Stromistwerte berechnet werden.

Dies vorausgesetzt, gelangt man zu einem Systemmodell, mit dem eine Kompensation von Störgrößen und zusätzlich Messwertverzögerungen erfolgt, in dem man die beiden oben beschriebenen Beobachtermodelle miteinander kombiniert, wobei sich die letzte Zeile/Spalte aus dem zeitdiskreten Modellparameter $\underline{\Phi}_\rho$ - entsprechend Systemparameter $\underline{A}_\rho$ gemäß Gleichungen (13) bzw. (15) - mit der ersten Zeile/Spalte aus dem zeitdiskreten Modellparameter $\underline{\Phi}_d$ - vgl. Gleichung (26) überschneiden.

Seien $\underline{\Phi}_d^{\tau'}$ und $\underline{\Phi}'_\rho$ die Matrizen ohne die erwähnte Zeile/Spalte, so kann man folgende kompakte Schreibweise für das Beobachtungsmodell $\underline{\Phi}_b$ wählen:

$$\underline{\Phi}_b = \begin{pmatrix} \underline{\Phi}' & \vdots & \\ \cdots & \underline{\Phi} & \cdots \\ & \vdots & \underline{\Phi}_d^{\tau'} \end{pmatrix}, \qquad \underline{\Gamma}_b = \begin{pmatrix} \underline{\Gamma}'_\rho \\ 0 \\ \underline{\Gamma}_d^{\tau'} \end{pmatrix} \tag{38}$$

Der Beobachterentwurf ist danach Standard, es gilt die Beobachtungsgleichung:

$$\underline{\hat{x}}(k+1) = \underline{\Phi}_b\,\underline{\hat{x}}(k) + \underline{\Gamma}_b\,\underline{u}(k) + \underline{L}\big(\underline{y}(k) - \underline{H}\,\underline{\hat{x}}(k)\big) \tag{39}$$

Das Regelgesetz ist leicht abgeändert, zur Störunterdrückung wird die beobachtete Störung $\underline{\hat{\rho}}$ von der Stellgröße abgezogen:

$$\underline{u}(k) = \underline{K}(k)\underline{\hat{x}}(k) - \underline{\hat{\rho}}(k)$$

$$\tag{40}$$

Mit entsprechenden Ausgangsmatrizen können $\hat{\underline{x}}$ und $\hat{\underline{\rho}}$ für die Implementierung ausmaskiert werden:

$$\underline{H}_{\hat{x}} = \big(\underline{0} \;\cdots\; \underline{I} \;\cdots\; \underline{0}\big), \qquad \underline{H}_{\hat{\rho}} = \big(\underline{I} \;\cdots\; \underline{0} \;\cdots\; \underline{0}\big) \tag{41}$$

Der Regelkreis hat dann die Struktur entsprechend Figur 5.

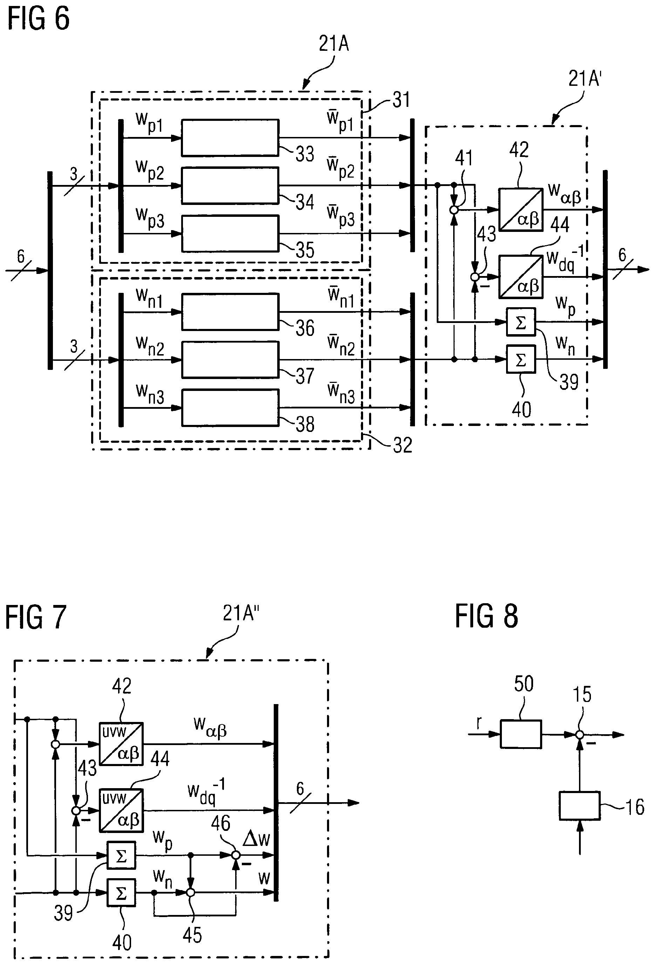

Wie die Fig. 5 ferner zeigt, werden hier auch Zwischenkreisenergiewerte $\underline{w}(t)$ gemessen und dem Eingang des Analog/Digitalwandlers 18b zugeführt; die Zwischenkreisenergiewerte werden durch Messung der Spannungen $U_{C,Sub}$ an den Submodulen (vgl. Fig.3) und durch bekannte Errechnung der Zwischenkreisenergiewerte aus diesen Spannungen ermittelt. Auch hierbei ergeben sich durch die Weiterverarbeitung und Übertragung der Zwischenkreisenergiewerte Verzögerungen (vgl. Block 20). Diese verzögerten Zwischenkreisenergiewerte $\underline{w}_d(k)$ werden einer Schätzeinheit 21A zur Verfügung gestellt, in der mittels Schätzung (anhand eines Signalmodells der Zwischenkreisenergiewerte), die unten noch näher anhand der Fig. 6 erläutert wird, am Ausgang der Schätzeinheit 21A Zustands-Zwischenkreisenergieistwerte $\underline{\hat{w}}(k)$ zur Verfügung stehen. Über eine der Schätzeinheit 21A nachgeordnete Aufbereitungseinheit 21A' werden diese Zustands-Zwischenkreisenergieistwerte $\hat{w}(k)$ mit Soll-Zwischenkreisenergiewerten $\hat{w}_{soll}(t)$ verglichen, und es wird die Differenz der Regelungseinheit 16 zugeführt. Daraufhin stellen sich am Ausgang des Umrichters 1 die gewünschten Zustands-Zwischenenergiewerte $\underline{w}(k)$ ein.

Die in der Fig. 6 dargestellte Schätzeinheit 21A ist an alle sechs Leistungshalbleiterventilzweige 2 des Umrichters 1 angeschlossen, was in der schematischen Darstellung mit der Ziffer "6" symbolisiert ist. Dabei ist der Anschluss so getroffen, dass die drei jeweils positiv-seitigen (z.B. in Fig. 2 oberen) Leistungshalbleiterventilzweige 2 getrennt von den drei jeweils negativ-seitigen (in Fig. 2 unteren) Leistungshalbleiterventilzweigen 2 der Schätzeinheit 21A zugeführt werden, durch die Ziffer "3" jeweils symbolisiert.

Die Schätzeinheit 21A umfasst eine erste Schätzuntereinheit 31 und eine weitere Schätzuntereinheit 32; die Schätzuntereinheit 31 wiederum ist mit jeweils einem Schätzer 33, 34 und 35 ausgestattet, die an jeweils einem positiv-seitigen Leistungshalbleiterventilzweig 2 des Umrichters 1 angeschlossen sind und somit mit Zwischenkreisenergiewerten w1p bis w3p der positiv-seitigen Leistungshalbleiterventilzweige 2 beaufschlagt sind. Entsprechend sind Schätzern 36, 37 und 38 der Schätzuntereinheit 32 Zwischenkreisenergiewerte w1n bis w3n der negativ-seitigen Leistungshalbleiterventilzweige 2 zugeführt.

Die Schätzer 33 bis 38 sind jeweils Parameter-Schätzer, beispielsweise Least-Square-Schätzer. Jedem Parameter-Schätzer 33 bis 38 ist im hier beschriebenen Ausführungsbeispiel ein Schwingungsmodell der Zwischenenergiewerte $w(t)$ vorgegeben, das sich durch folgende Gleichung mathematisch beschreiben lässt:

$$w(t) = A_0(t) + A_{11}(t) * \cos(\omega t) + A_{12}(t) * \sin(\omega t) + A_{21}(t) * \cos(2\omega t) +$$

$$A_{22}(t) * \sin(2\omega t)$$

In dieser Gleichung geben $A_0(t)$ den Gleichanteil der Zwischenkreisenergiewerte $w(t)$ und $A_{11}(t)$ bis $A_{22}(t)$ weitere Parameter des Schwindungsmodells an; $\omega$ bezeichnet die Kreisfrequenz des mit dem Umrichter 1 verbundenen Wechselspannungsnetzes. Der besseren Übersichtlichkeit halber ist in der Fig.6 nicht im Einzelnen dargestellt, wie die einzelnen Least-Square-Schätzer mit einer der Frequenz des Wechselspannungsnetzes entsprechenden Messgröße beaufschlagt sind.

Bei dem durch die obige Gleichung beschriebenen Schwingungsmodell werden von den Least-Square-Schätzern zeitabhängige Parameter $A_0(t)$ bis $A_{22}(t)$ benutzt, was zu einer hohen Genauigkeit der Schätzung führt, aber auch relativ aufwendig ist. Als Zeitabhängigkeit kann beispielsweise eine lineare Funktion oder eine Exponentialfunktion gewählt werden.

Die Least-Square-Schätzer 33 bis 35, die der positiv-seitigen Drehspannungsquelle 2P zugeordnet sind, sind demzufolge mit den positiv-seitigen Zwischenkreisenergiewerten $w_{1p}$, $w_{2p}$ und $w_{3\rho}$ beaufschlagt. Entsprechendes gilt hinsichtlich der Schätzer 36 bis 38. Die ausgangsseitig auftretenden geschätzten Zwischenkreisenergiewerte $\overline{w}_{1p}$, $\overline{w}_{2p}$ und $\overline{w}_{3p}$ sowie $\overline{w}_{1n}$, $\overline{w}_{2n}$ und $\overline{w}_{3n}$ werden der Aufbereitungseinheit 21A' zugeführt, in der in Summierern 39 und 40 die Zwischenkreisenergiewertesummen $w_p$ der positiv-seitigen 2P bzw. $w_n$ der negativ-seitigen 2N Drehspannungsquelle gebildet werden. Die Zwischenkreisenergiewerte $\overline{w}_{1p}$ bis $\overline{w}_{3n}$ stellen Mittelwerte dar, die prinzipiell auch auf andere Weise gebildet werden können.

In einer Summiereinheit 41 werden die Zwischenkreisenergiewerte $\overline{w}_{p1}$ bis $w_{n3}$ elementeweise addiert, also $\overline{w}_{p1}$ und $\overline{w}_{n1}$, $\overline{w}_{p2}$ und $\overline{w}_{n2}$ sowie $\overline{w}_{p3}$ und $\overline{w}_{n3}$. Die so gewonnenen drei Werte werden einer alpha-beta-Transformation in einem Transformationselement 42 unterzogen, so dass an seinem Ausgang die alpha-beta-transformierten, gemessenen Zwischenkreisenergiewertesummen $w_{\alpha\beta}$ der positiv-seitigen Drehspannungsquelle auftreten. In einem Differenzbildner 43 werden die Zwischenkreisenergiewerte $\overline{w}_{p1}$ bis $w_{n3}$ elementeweise voneinander subtrahiert und in einem weiteren Transformationselement 44 daraus alpha-beta-transformierte, gemessene Zwischenkreiseinergiewertediffe-renzen $w_{dq\text{-}1}$ zwischen positiv- und negativ-seitiger Drehspannungsquelle 2P und 2N gebildet. Die Größen $w_{\alpha\beta}$, $w_{dq\text{-}1}$, $w_p$ und $w_n$ werden zusammen mit den Größen $\hat{x}(k)$, $\hat{x}_{\alpha\beta}(k)$, $\hat{x}_{dq\text{-}1}(k)$ des Transformationsbausteins 21' der Regelungseinheit 16 (vgl. z. B. Figur 5) zugeführt und dort verarbeitet.

Mit der in Figur 7 dargestellten Aufbereitungseinheit 21A" lässt sich die alternative Ausführungsform des erfindungsgemäßen Verfahrens unter Benutzung der Gesamtenergie des Umrichters 1 durchführen. Zu diesem Zweck sind bei der Aufbereitungseinheit 21A" beiden Summierern 39 und 40 ein weiterer Summierer 45 und ein weiterer Differenzbildner 46 nachgeordnet; am Ausgang des weiteren Summierers 45 ergibt sich die Gesamtenergie $w$ des Umrichters 1 aus der Summe der Zwischenkreisenergiewerte der positiv- und negativ-seitigen Drehspannungsquelle 2P bzw. 2N und am Ausgang des weiteren Differenzbildners 46 die Differenz $\Delta w$ aus den Werten für 2P und 2N.

Wie die Figuren 4 und 5 zeigen, werden die Ausgangswerte des Transformationsbausteins 21' und der Aufbereitungseinheit 21A' über die Addiereinheit 15 der Regelungseinheit 16 zugeführt, die von einem periodischen Regler mit periodisch-zeitvarianter Verstärkung gebildet ist. Wie dieser Regler im Einzelnen ausgeführt ist und wie mit dem oben beschriebenen erfindungsgemäßen Verfahren bzw. Anordnung eine Balancierung und Umrichterregelung erfolgen kann, ist nachfolgend erläutert.

Die sogenannte horizontale Balancierung lässt sich mit Hilfe von Gleichstromasymmetrien bzw. Kreisgleichströmen des Umrichters 1 bewerkstelligen, ohne dass dadurch eine Beeinflussung des Netz- bzw. Gleichstroms eintritt. Geht man von den Summen der Energien $w_1$, $w_2$, $w_3$ in den drei Zweigen des Umrichters 1 aus mit $w_1=w_{p1}+w_{n1}$, $w_2=w_{p2}+w_{n2}$ sowie $w_3=w_{p3}+w_{n3}$ (vgl. Figur 6) aus, dann lässt sich im Rahmen einer Leistungsbetrachtung die Beziehung (41) aufstellen:

$$\begin{pmatrix} \dot{w}_1 \\ \dot{w}_2 \\ \dot{w}_3 \end{pmatrix} = \begin{pmatrix} u_{d0}+\overline{u}_1 & 0 & 0 \\ 0 & u_{d0}+\overline{u}_2 & 0 \\ 0 & 0 & u_{d0}+\overline{u}_3 \end{pmatrix} \cdot \begin{pmatrix} \overline{i}_1 \\ \overline{i}_2 \\ \overline{i}_3 \end{pmatrix}$$

$$(41)$$

In dieser Gleichung bezeichnen $\dot{w}_1$, $\dot{w}_2$, $\dot{w}_3$ die zeitliche Ableitung der Energien und somit jeweils eine Leistung und $u_{d0}$ die interne Umrichtergleichspannung; $\overline{i}_1$ bis $\overline{i}_3$ und $\overline{u}_1$ und $\overline{u}_3$ sind die Gleichgrößen in den Zweigen des Umrichters. Vereinfacht man die Gleichung (41), indem man einen Arbeitspunkt $\overline{u}_1=\overline{u}_2=\overline{u}_3=\overline{u}_{dAP}$ annimmt, dann vereinfacht sich die Beziehung (41) zur nachstehenden Gleichung (42):

$$(42)$$

$$\begin{pmatrix} \dot{w}_1 \\ \dot{w}_2 \\ \dot{w}_3 \end{pmatrix} = u_{dAP} \cdot \begin{pmatrix} \overline{i}_1 \\ \overline{i}_2 \\ \overline{i}_3 \end{pmatrix}$$

Nach einer $\alpha\beta$-Transformation und zulässigem Weglassen des Nullsystems ergibt sich dann hinsichtlich der

horizontalen Balancierung

$$(43)$$

$$\begin{pmatrix} \dot{w}_\alpha \\ \dot{w}_\beta \end{pmatrix} = \underbrace{\begin{pmatrix} u_{d_{AP}}/2 & 0 \\ 0 & u_{d_{AP}}/2 \end{pmatrix}}_{A_{hBal}} \cdot \begin{pmatrix} i_{Kr_\alpha} \\ i_{Kr_\beta} \end{pmatrix}$$

in der $\dot{w}_\alpha$, $\dot{w}_\beta$ und $i_{Kr\alpha}$, $i_{Kr\beta}$ $\alpha\beta$-transformierte Leistungen bzw. Kreisströme angeben.

Bezeichnet man die vertikale Balancierung am Arbeitspunkt $u_{MMCAP}$ des Umrichters 1 mit $u_{MMCAP} = u_N$, wobei $u_N$ die Netzspannung bezeichnet, dann ergibt sich in komplexer Schreibweise:

$$\begin{pmatrix} \dot{w}_{11} \\ \dot{w}_{22} \\ \dot{w}_{33} \end{pmatrix} = Re \left\{ \begin{pmatrix} \underline{u}_1 & 0 & 0 \\ 0 & \underline{u}_2 & 0 \\ 0 & 0 & \underline{u}_3 \end{pmatrix} \cdot \begin{pmatrix} \underline{i}_1^* \\ \underline{i}_2^* \\ \underline{i}_3^* \end{pmatrix} \right\}$$

$$(44)$$

in der $\dot{w}_{11}$, $\dot{w}_{22}$ und $\dot{w}_{33}$ die zeitliche Ableitung der Energie auf der Netzseite in der drei Phasen, $u_{N1}$ bis $u_{N3}$ die Phasenspannungen und $\underline{i}_1^*$ bis $\underline{i}_3^*$ konjugiert komplexen Netzströme, bezeichnen. Nach Umformung und Transformation unter Zurückgreifen auf das Gegensystem im Kreisstrom ergibt sich dann

$$(45)$$

$$\begin{pmatrix} \dot{w}_{d^{-1}} \\ \dot{w}_{q^{-1}} \end{pmatrix} = \underbrace{\begin{pmatrix} -\frac{1}{2} u_N & 0 \\ 0 & -\frac{1}{2} u_N \end{pmatrix}}_{A_{vBal}} \cdot \begin{pmatrix} i_{Kr_{d^{-1}}} \\ i_{Kr_{q^{-1}}} \end{pmatrix}$$

Zur Modellierung des Umrichters 1 wird von dem bekannten Systemmodell - hier im dq-System ausgegangen:

$$(46)$$

$$\dot{x} = A_{dq} x + B_{dq} u, \quad x_{dq} = \begin{pmatrix} i_{N_d} & i_{N_q} & i_d & i_{Kr_d} & i_{Kr_q} \end{pmatrix}$$

Erfolgt hier eine Erweiterung auf das $\alpha\beta$- und das Gegensystem des Kreisstromes, dann lautet der neue Zustandsvektor:

$$x = \begin{pmatrix} i_{N_d} & i_{N_q} & i_d & i_{Kr_d} & i_{Kr_q} & i_{Kr_\alpha} & i_{Kr_\beta} & i_{Kr_{d^{-1}}} & i_{Kr_{q^{-1}}} \end{pmatrix}$$

$$(47)$$

Für die Systemmatrix gilt dann:

$$A = \begin{pmatrix} A_{dq} & 0 & 0 & 0 & 0 \\ 0 & -\frac{R_{Kr}}{L_{Kr}} & 0 & 0 & 0 \\ 0 & 0 & -\frac{R_{Kr}}{L_{Kr}} & 0 & 0 \\ 0 & 0 & 0 & -\frac{R_{Kr}}{L_{Kr}} & \omega \\ 0 & 0 & 0 & -\omega & -\frac{R_{Kr}}{L_{Kr}} \end{pmatrix},$$

$$(48)$$

wobei die Vorzeichen von $\omega$ umgekehrt sind wie in $A_{dq}$. Die Größen $R_{Kr}$ und $L_{Kr}$ ergeben sich aus Figur 1.

Weiter wird zusammengefasst:

$$A_{\alpha\beta} = \begin{pmatrix} -\frac{R_{Kr}}{L_{Kr}} & 0 \\ 0 & -\frac{R_{Kr}}{L_{Kr}} \end{pmatrix}, \quad A_{dq^{-1}} = \begin{pmatrix} -\frac{R_{Kr}}{L_{Kr}} & \omega \\ -\omega & -\frac{R_{Kr}}{L_{Kr}} \end{pmatrix}$$

$$(49)$$

Gilt für

$$u = \begin{pmatrix} u_{p_d} & u_{p_q} & u_d & u_{n_d} & u_{n_q} \end{pmatrix},$$

$$(50)$$

dann gilt für

$$B_{dq} = \begin{pmatrix} -\frac{1}{L_L} & 0 & 0 & \frac{1}{L_L} & 0 \\ 0 & -\frac{1}{L_L} & 0 & 0 & \frac{1}{L_L} \\ 0 & 0 & -\frac{1}{L'_d} & 0 & 0 \\ -\frac{1}{2L_{Kr}} & 0 & 0 & -\frac{1}{2L_{Kr}} & 0 \\ 0 & -\frac{1}{2L_{Kr}} & 0 & 0 & -\frac{1}{2L_{Kr}} \end{pmatrix}$$

$$(51)$$

mit $R_L = 1/2R_{Kr} + R_\sigma$, $L_L = 1/2L_{Kr} + L_\sigma$, $R'_d = 2/3R_{Kr} + R_d$ und $L'_d = 2/3L_{Kr} + L_d$ (vgl. Figur 1). Die anderen Frequenzbereiche des Kreisstroms sind über dieselben Eingangsgrößen miteinander verknüpft. Diese Verknüpfung kann durch die Rücktransformation $T_{dq}^{-1}(t)$ ausgedrückt werden. So gilt für

$$B(t) = \begin{pmatrix} & B_{dq} & \\ T_{dq}^{-1}(t)B_{Kr} & 0 & T_{dq}^{-1}(t)B_{Kr} \\ T_{dq}^{-2}(t)B_{Kr} & 0 & T_{dq}^{-2}(t)B_{Kr} \end{pmatrix}, \quad \text{mit } B_{Kr} = \begin{pmatrix} -\frac{1}{2L_{Kr}} & 0 \\ 0 & -\frac{1}{2L_{Kr}} \end{pmatrix} \qquad (52)$$

Das Systemmodell A,B($t$) ist somit ein zeitvariantes System. Da sich $T_{dq}(t)$ periodisch wiederholt, spricht man von einem periodisch zeitvarianten System, oder PLTV-System (Periodic Linear Time-Variant System). Definiert man eine Matrix $A_W$ gemäß nachfolgender Gleichung (53)

$$A_w = \begin{pmatrix} u_{P_p}/2 & u_{P_q}/2 & u_{d0}/2 & u_{P_p} & u_{P_p} \\ -u_{n_p}/2 & -u_{n_q}/2 & u_{d0}/2 & u_{n_p} & u_{n_p} \end{pmatrix}$$

$$(53)$$

lässt sich die Systemmatrix $\underline{A}_{p2TV}$ für ein solches System und die Eingangsmatrix $B_{PLTV}$

$$\underline{A}_{PLTV} = \begin{pmatrix} A_{dq} & 0 & 0 & 0 & 0 & 0 \\ 0 & A_{\alpha\beta} & 0 & 0 & 0 & 0 \\ 0 & 0 & A_{dq^{-1}} & 0 & 0 & 0 \\ 0 & A_{hBal} & 0 & 0 & 0 & 0 \\ 0 & 0 & A_{vBal} & 0 & 0 & 0 \\ A_w & 0 & 0 & 0 & 0 & 0 \end{pmatrix}, \quad B_{PLTV}(t) = \begin{pmatrix} B(t) \\ 0 \\ 0 \\ 0 \\ 0 \\ 0 \end{pmatrix}$$

$$(54)$$

beschreiben sowie die Zustandsvariable $x_{PLTV}$ und der Eingangsvariable $u_{PLTV}$ mit

$$x_{PLTV} = \begin{pmatrix} \mathbf{x} \\ \mathbf{x}_{\alpha\beta} \\ \mathbf{x}_{dq^{-1}} \\ \mathbf{w}_{\alpha\beta} \\ \mathbf{w}_{dq^{-1}} \\ \mathbf{w} \end{pmatrix}, \quad u_{PLTV} = \mathbf{u}$$

$$(55)$$

Es sind Methoden bekannt, optimale Regler für PLTV-Systeme zu entwerfen. Darauf wird hier zurückgegriffen, um einen gemeinschaftlichen Reglerentwurf für die gesamte Umrichterregelung inklusive Energieregelung und Balancierung zu ermöglichen. Der entworfene Regler ersetzt die Funktion sämtlicher Regler, welche die entsprechenden Aufgaben vorher erfüllt haben. Detaillierte Beschreibungen einer Methode finden sich in Bittanti, S.; Colaneri, P.; De Nicolao, G.: "The Periodic Riccati Equation": In: Bittanti, S. (Hrsg.); Laub, A. J. (Hrsg.); Willems, J. C. (Hrsg.): The Riccati Equation. Berlin: 1991 und Görges, Daniel; Izäk Michal; Liu Steven "Optimal Control of Systems with Resource Constraints". In: Proceedings of the 46th IEEE Conference on Decision and Control, 2007, S. 1070-1075

Alternativ zur Regelung der Energie der positiv-seitigen 2P und der negativ-seitigen 2N Drehspannungsquelle kann auch die Abweichung zwischen diesen Quellen $\Delta w$ über ein Mitsystem im Kreisstrom - und zwar als reiner Kreiswirkstrom - geregelt werden. Die Matrix $A_w$ lautet dann:

$$A_w = \begin{pmatrix} 0 & 0 & 0 & -u_N/3 & 0 \\ -u_{N_p} & -u_{N_q} & u_{d0} & 0 & 0 \end{pmatrix}$$

$$(56)$$

Bei der Modellierung des Umrichters 1 aus Gleichung (54) ist $A_{PLTV}$ immer konstant, $B_{PLTV}(t)$ ist periodisch-zeitvariant. Wird 512 mal pro Netzperiode abgetastet, gilt p=512. Weiter gilt dann für die Abtastzeitpunkte

$t_k = k \cdot \dfrac{2\pi}{\omega \cdot p}$ . Das kontinuierliche periodisch-zeitvariante System $A_k$, $B_k$ sowie dessen kontinuierliche Gewichtungsmatrizen Q, N, R können wie bekannt diskretisiert werden, so dass man nachfolgend das zeitdiskrete Optimierungsproblem aus Gleichung (5.17) erhält:

$$(57)$$

$$\min_{u(k)} \sum_{k=0}^{\infty} \begin{pmatrix} x(k) \\ u(k) \end{pmatrix}^T \begin{pmatrix} Q_k & N_k \\ N_k^T & R_k \end{pmatrix} \begin{pmatrix} x(k) \\ u(k) \end{pmatrix}$$

$$\text{NB:} \begin{cases} x(k+1) &= \Phi_k x(k) + \Gamma_k u(k) \\ x(0) &= \begin{pmatrix} x_1^T(0) & \cdots & x_N^T(0) \end{pmatrix}^T \end{cases}$$

Bei der oben angesprochenen bekannten Methode zum Reglerentwurf wird ein sogenanntes Lifting durchgeführt, das im Prinzip eine weitere Transformation darstellt, bei der das $p$-periodische PLTV-System in ein LTI-System (Linear Time-Invariant System) überführt wird. Dabei wird die Zustandsgleichung über eine Periode, also $p$ Diskretisierungsschritte gelöst:

$$x(k+1) = \widehat{\Phi}_k x(k) + \widehat{\Gamma}_k \widehat{u}(k)$$
$$x(k+2) = \widehat{\Phi}_{k+1} x(k+1) + \widehat{\Gamma}_{k+1} \widehat{u}(k+1)$$
$$= \widehat{\Phi}_{k+1} \widehat{\Phi}_k x(k) + \widehat{\Phi}_{k+1} \widehat{\Gamma}_k \widehat{u}(k) + \widehat{\Gamma}_{k+1} \widehat{u}(k+1)$$
$$\vdots$$
$$x(k+p) = \Psi_{k+p,k} x(k) + \Psi_{k+p,k+1} \widehat{\Gamma}_k \widehat{u}(k) + \Psi_{k+p,k+2} \widehat{\Gamma}_{k+1} \widehat{u}(k+1) + \ldots$$
$$\ldots + \widehat{\Gamma}_{k+p-1} \widehat{u}(k+p-1) \text{ mit } \Psi_{k+p,k} = \widehat{\Phi}_{k+p-1} \widehat{\Phi}_{k+p-2} \cdots \widehat{\Phi}_k$$
$$= \underbrace{\Psi_{k+p,k}}_{\widehat{\Phi}_k} x(k)$$

$$+ \underbrace{\left( \Psi_{k+p,k+1} \widehat{\Gamma}_k \quad \Psi_{k+p,k+2} \widehat{\Gamma}_{k+1} \cdots \widehat{\Gamma}_{k+p-1} \right)}_{\widehat{\Gamma}_k} \begin{pmatrix} \widehat{u}(k) \\ \widehat{u}(k+1) \\ \vdots \\ \widehat{u}(k+p-1) \end{pmatrix}$$

$$(58)$$

Es können dann bekannte Optimalreglerentwurfsmethoden für LTI-Systeme angewendet werden. Das Ergebnis ist ein $p$-periodischer Regler. Die Regeleinheit 16 besitzt also periodisch-zeitvariante Verstärkungen. Die Implementierung kann zum Beispiels durch periodisches Umschalten der Reglermatrizen von $\underline{K}_1 \ldots \underline{K}_{512}$ geschehen.

Wird bei der erfindungsgemäßen Anordnung eine Eingangstruktur verwendet, wie sie in Figur 8 dargestellt ist, mit einer Regeleinheit 16 als periodischer Regler zwischen dem Transformationsbaustein 21' bzw. der Aufbereitungseinheit 21A' und der Addiereinheit 15, dann lässt sich auch eine periodische Vorsteuereinheit 50 einsetzen mit einem Übertragungsverhalten $\underline{N}(k)$

$$\underline{N}(k) = \underline{N}_v + \underline{K}_k \cdot \underline{N}_x , \qquad (59)$$

wobei $\underline{N}_v$ die Übertragungseigenschaft der Vorsteuereinheit 14 und $\underline{N}_x$ die Übertragungseigenschaft der Abbildungseinheit 14' sowie $\underline{K}_k$ das Regelverhalten der Regelungseinheit 16 gemäß Figur 4 bezeichnen.

Gemäß der Erfindung ist ein Beobachter ermöglicht, der Störungen, Oberschwingungen, Mess- und Stelltotzeiten berücksichtigt. Durch einen solchen Beobachter kann eine Regelungsstruktur, die beispielsweise als Zustandsregelung ausgeführt ist, unverzögerte geschätzte Messwerte bereitstellen und mithilfe der ermittelten Störungen und Oberschwingungen diese indirekt kompensieren. Damit erhält die Gesamtregelung die Fähigkeit zur Kompensation verschiedener Oberschwingungen und Störungen im Mit-, Gegen- und $\alpha\beta$-System, ohne dass das Führungsverhalten negativ beeinflusst wird.

Durch eine beschleunigte Regelung und eine schnelle Störgrößenkompensation kann die Zwischenkreisenergieregelung und die *Balancierung* der Energien der oberen und unteren Drehspannungsquellen so verbessert werden, dass im Vergleich zu bekannten Lösungen entweder eine geringere Anzahl von Submodulen pro Zweig oder eine geringere Kondensatorkapazität ausreicht, um dieselben Netzfehlerfälle zu beherrschen. Eine geringere Modulzahl oder eine geringere Kondensatorkapazität schlagen sich in geringeren Umrichterkosten nieder.

Die Möglichkeit zur Oberschwingungskompensation ergibt darüber hinaus der Vorteil, dass eine wirtschaftliche Nutzung des Umrichters erzielt ist, da durch Erlangung dieser Fähigkeit Netzfilter aktiver oder passiver Art eingespart werden können.

Eine bessere Beherrschung von Netzfehlerfällen bedeutet eine geringere Ausfallzeit bzw. -wahrscheinlichkeit, welches für Netzbetreiber in wirtschaftlicher Hinsicht ein Vorteil sein kann.

**Patentansprüche**

**1.** Verfahren zum Regeln eines steuerbare Leistungshalbleiter aufweisenden Umrichters (1), bei dem

- Zustandsistwerte $\hat{\underline{x}}(k)$, die den Zustand des Umrichters (1) beschreiben, mit Zustandssollwerten $\underline{x}_{Soll}(k)$ unter Gewinnung von Regeldifferenzwerten verglichen werden,
- die Regeldifferenzwerte einer Regelungseinheit (16) zugeführt werden, die an ihrem Ausgang Stellspannungswerte $\underline{u}(k)$ erzeugt, und
- eine Steuerelektronik (19) in Abhängigkeit der Stellspannungswerte $\underline{u}(k)$ Steuersignale bereitstellt und an die Leistungshalbleiter (S1, S2) des Umrichters (1) überträgt, wobei die Regelungseinheit (16) solche Stellspannungswerte $\underline{u}(k)$ generiert, dass die Regeldifferenzwerte möglichst klein werden,
- die Zustandsistwerte $\hat{\underline{x}}(k)$ von einer Beobachtereinheit (21) ausgehend von den Stellspannungswerten $\underline{u}(k)$ und unter Berücksichtigung von gemessenen Stromwerten $\underline{x}(k)$ berechnet werden,

**dadurch gekennzeichnet, dass**

- Zustandszwischenkreisenergieistwerte $\hat{\underline{w}}(k)$ von einer Schätzereinheit (21A) unter Berücksichtigung von gemessenen Zwischenkreisenergiewerten $\underline{w}(k)$ der positiv-seitigen (2P) und der negativ-seitigen (2N) Drehspannungsquelle des Umrichters (1) berechnet werden, wobei die Beobachtereinheit (21) und die Schätzereinheit (21A) den Umrichter (1) modellieren, so dass die berechneten Zustandsstromistwerte $\hat{\underline{x}}(k)$ und Zustandszwischenkreisenergieistwerte $\hat{\underline{w}}(k)$ im eingeschwungenen Zustand den fehlerfreien Strom- und Zwischenkreisenergiewerten entsprechen, und
- die fehlerfreien Strom- und Zwischenkreisenergiewerte $\hat{\underline{x}}(k)$, $\hat{\underline{w}}(k)$, der als periodischer Regler mit periodischzeitvarianter Verstärkung ausgebildeten Regelungseinheit (16) zugeführt werden.

**2.** Verfahren nach Anspruch 1,
**dadurch gekennzeichnet, dass**

- die Beobachtereinheit (21) mit einem periodischzeitvarianten Systemmodell verwendet wird, das ausgehend von der allgemeinen Zustandsgleichung

$$\dot{\underline{x}} = \underline{A} \cdot \underline{x} + \underline{B} \cdot \underline{u}$$

mit $\underline{x}$ als Zustandsvariable, $\dot{\underline{x}}$ als zeitlicher Ableitung der Zustandsvariablen, $\underline{A}$ als Systemmatrix, $\underline{B}$ als Eingangsmatrix und $\underline{u}$ als Eingangsvariable eine zeitinvariante Systemmatrix $\underline{A}_{PLTV}$ und eine zeitvariante Eingangsmatrix $\underline{B}_{PLTV}(t)$ aufweist mit

$$\underline{x}_{PLTV} = \begin{pmatrix} \underline{x} \\ \underline{x}_{\alpha\beta} \\ \underline{x}_{dq^{-1}} \\ \underline{w}_{\alpha\beta} \\ \underline{w}_{dq^{-1}} \\ \underline{w} \end{pmatrix},$$

wobei $\underline{x}$ für den gemessenen, park-transformierten Strom, $\underline{x}_{\alpha\beta}$ für den alpha-beta-transformierten und $\underline{x}_{dq-1}$ für den zweifach park-rücktransformierten gemessenen Strom (Gegensystem), $\underline{w}_{\alpha\beta}$ für die alpha-beta-transformierten, gemessenen Zwischenkreisenergiewertesummen von oberer und unterer Drehspannungsquelle und $\underline{w}_{dq-1}$ für die alpha-beta-transformierten, gemessenen Zwischenkreisenergiewertedifferenzen zwischen oberer und unterer Drehspannungsquelle und $\underline{w}$ für die gemessenen Zwischenkreisenergiewerte des gesamten Umrichters steht.

3. Verfahren nach Anspruch 1 oder 2,
**dadurch gekennzeichnet, dass** die Zustandssollwerte Stromsollwerte $\underline{x}_{Soll}(k)$ und Zwischenkreisenergiesollwerte $\underline{w}_{Soll}(k)$ sind.

4. Verfahren zum Regeln eines steuerbare Leistungshalbleiter aufweisenden Umrichters (1), bei dem

- Zustandsistwerte $\hat{\underline{x}}(k)$, die den Zustand des Umrichters (1) beschreiben, mit Zustandssollwerten $\underline{x}_{Soll}(k)$ unter Gewinnung von Regeldifferenzwerten verglichen werden,
- die Regeldifferenzwerte einer Regelungseinheit (16) zugeführt werden, die an ihrem Ausgang Stellspannungswerte $\underline{u}(k)$ erzeugt, und
- eine Steuerelektronik (19) in Abhängigkeit der Stellspannungswerte $\underline{u}(k)$ Steuersignale bereitstellt und an die Leistungshalbleiter (S1, S2) des Umrichters (1) überträgt, wobei die Regelungseinheit (16) solche Stellspannungswerte $\underline{u}(k)$ generiert, dass die Regeldifferenzwerte möglichst klein werden,

**dadurch gekennzeichnet, dass**

- die Zustandsistwerte $\hat{\underline{x}}(k)$ von einer Beobachtereinheit (21) ausgehend von den Stellspannungswerten $\underline{u}(k)$ und unter Berücksichtigung von gemessenen Stromwerten $\underline{x}(k)$ berechnet werden,
- Zustandszwischenkreisenergieistwerte $\hat{\underline{w}}(k)$ von einer Schätzereinheit (21A) unter Berücksichtigung von gemessenen Zwischenkreisenergiewerten $\underline{w}(k)$ der positiv-seitigen (2P) und der negativ-seitigen (2N) Drehspannungsquelle des Umrichters (1) berechnet werden, wobei die Beobachtereinheit (21) und die Schätzereinheit (21A) den Umrichter (1) modellieren, so dass die berechneten Zustandsstromistwerte $\hat{\underline{x}}(k)$ und Zustandszwischenkreisenergiewerte der Gesamtenergie des Umrichters und der Differenz der Zwischenkreisenergiewerte $\underline{w}(k)$ *der* positiv-seitigen (2P) und der negativ-seitigen (2N) Drehspannungsquelle des Umrichters (1) im eingeschwungenen Zustand den fehlerfreien Strom- und Zwischenkreisenergiewerten entsprechen, und
die fehlerfreien Strom- $\hat{\underline{x}}(k)$ und Zwischenkreisenergiewerte $\hat{\underline{w}}(k)$
einer als periodischer
Regler mit periodisch-zeitvarianter Verstärkung ausgebildeten Regelungseinheit zugeführt werden.

5. Verfahren nach Anspruch 4,
**dadurch gekennzeichnet, dass**

- die Zustandssollwerte Stromsollwerte $\underline{x}_{Soll}(k)$ und Zwischenkreisenergiesollwerte sind.

6. Verfahren nach einem der vorangehenden Ansprüche,
**dadurch gekennzeichnet, dass**

- die Zustandssollwerte mittels einer periodisch arbeitenden Vorsteuereinheit (N) aus vorgegebenen Sollwerten gebildet werden.

**7.** Verfahren nach einem der vorangehenden Ansprüche, **dadurch gekennzeichne**, dass

- bei dem periodischen Regler die periodisch-zeitvariante Verstärkung mittels periodischen Umschaltens von Reglermatrizen vorgenommen wird.

**8.** Verfahren nach einem der vorangehenden Ansprüche, **dadurch gekennzeichnet, dass**

- die Beobachtereinheit (21) Störungseffekte berücksichtigt, so dass die Zustandsstromistwerte $\hat{x}(k)$ im eingeschwungenen Zustand den von Störungseffekten befreiten Strommesswerten entsprechen.

**9.** Verfahren nach Anspruch 8, **dadurch gekennzeichnet, dass**

- die Beobachtereinheit (21) neben den im eingeschwungenen Zustand fehlerfreien Zustandsstromistwerten $\hat{x}(k)$ gestörte Zustandsmodellmesswerte $\hat{\underline{y}}_d(k)$ bereitstellt, die messbaren Zustandsmesswerten $\underline{y}_d(k)$ entsprechen, wobei die Zustandsmodellmesswerte $\hat{\underline{y}}_d(k)$ mit durch Messungen erhaltenen Zustandsmesswerten $\underline{y}_d(k)$ unter Gewinnung einer Modellmesswertabweichung verglichen werden, die Modellmesswertabweichung der Modelleinheit (22) eingangsseitig zugeführt und die Modellierung so durchgeführt wird, dass die Modellmesswertabweichung möglichst klein wird.

**10.** Verfahren nach Anspruch 9, **dadurch gekennzeichnet, dass**

- die Modellmesswertabweichung der Modelleinheit (22) über eine Rückführungseinheit (25) zugeführt, welche die Modellmesswertabweichung verstärkt.

**11.** Verfahren nach einem der Ansprüche 8 oder 10, **dadurch gekennzeichnet, dass**

- das Berücksichtigen von Störungseffekten, das Berücksichtigen von Fehlern, die in einem mit dem Umrichter (1) verbundenen elektrischen Energieversorgungsnetz beruhen, und das Berücksichtigen von Fehlern umfasst, die durch den Umrichter (1) verursacht werden.

**12.** Verfahren nach einem der Ansprüche 8 bis 11, **dadurch gekennzeichnet, dass**

- die Beobachtereinheit (21) mit Hilfe eines Zustandraummodells gemäß

$$\hat{\underline{x}}'_\rho(k+1) = \underline{\Phi}_\rho \cdot \hat{\underline{x}}'_\rho(k) + \underline{\Gamma}\,\underline{u}_\rho(k)$$

$$\hat{\underline{y}}_d(k) = \underline{H}_\rho \cdot \hat{\underline{x}}'_\rho(k)$$

modelliert wird, wobei $\hat{\underline{x}}'_\rho(k)$ einem Zustandsvektor des Umrichters (1) einschließlich gestörter Zustände, $\underline{u}_\rho(k)$ einem Vektor der Stellspannungen, $\underline{\Phi}$, $\underline{\Gamma}$ und $\underline{H}$ Modellmatrizen und $\hat{\underline{y}}_d(k)$ einem Vektor von mit Störungen behafteten Zustandsmodellmesswerten entsprechen.

**13.** Verfahren nach einem der vorangehenden Ansprüche, **dadurch gekennzeichnet, dass**

- die Beobachtereinheit (21) Verzögerungseffekte berücksichtigt, so dass die Zustandsstromistwerte $\hat{x}(k)$ von Störungs- und Verzögerungseffekten befreiten unverzögerten und ungestörten Strommesswerten entsprechen.

**14.** Verfahren nach Anspruch 13, **dadurch gekennzeichnet, dass**

- die Beobachtereinheit (21) neben den unverzögerten Zustandsistwerten $\hat{x}(k)$ verzögerte Zustandsmodellmesswerte $\hat{\underline{y}}_d(k)$ bereitstellt, die messbaren Zustandsmesswerten $\underline{y}_d(k)$ entsprechen, wobei die Zustandsmodellmesswerte $\hat{\underline{y}}_d(k)$ mit durch Messungen erhaltenen Zustandsmesswerten $\underline{y}_d(k)$ unter Gewinnung einer Modellmesswertabweichung verglichen werden, die Modellmesswertabweichung der Modelleinheit (22) eingangsseitig zugeführt und die Modellierung so durchgeführt wird, dass die Modellmesswertabweichung möglichst klein wird.

**15.** Verfahren nach Anspruch 13 oder 14,
**dadurch gekennzeichnet, dass**

- die Modellmesswertabweichung der Modelleinheit (22) über eine Rückführungseinheit (25) zugeführt wird, welche die Modellmesswertabweichung verstärkt.

**16.** Verfahren nach einen der Ansprüche 13 bis 15,
**dadurch gekennzeichnet, dass**

- das Berücksichten von Verzögerungseffekten, das Berücksichtigen von Messverzögerungen, die bei der digitalen Erfassung der Zustandsgrößen des Umrichters (1) entstehen, und das Berücksichtigen von Stellverzögerungen umfasst, die von der Steuerelektronik (19) verursacht werden.

**17.** Verfahren nach einem der Ansprüche 13 bis 16,
**dadurch gekennzeichnet, dass**

- bei der Erfassung der Zustandsmesswerte $\underline{y}_d(k)$ die Zustandsgröße des Umrichters (1) gemessen, das dabei gewonnene Messsignale in Abtastschritten unter Gewinnung von Abtastwerten fortlaufend abgetastet und die Abtastwerte anschließend digitalisiert werden, wobei die Modellierung der sich dabei einstellenden Messverzögerungen unter der Annahme erfolgt, dass die Messverzögerung einer Zeitdauer von mehreren Abtastschritten entspricht.

**18.** Verfahren nach Anspruch 17
**dadurch gekennzeichnet, dass**
eine Messverzögerung von vier Abtastschritten berücksichtigt wird.

**19.** Verfahren nach einem der Ansprüche 13 bis 18,
**dadurch gekennzeichnet, dass**

- eine Stellverzögerung $\tau$ gemäß

$$\tau = (l-1)\cdot \mathrm{T} + \tau'$$

modelliert wird, wobei *l* der Anzahl der Abtastschritte entspricht, deren Summe kleiner ist als die Stellverzögerung $\tau$, und $\tau'$ als Restanteil kürzer ist als die Zeitdauer T zwischen zwei Abtastschritten k.

**20.** Verfahren nach Anspruch 19,
**dadurch gekennzeichnet, dass**
bei der Modellierung der Stellverzögerung zwei Abtastschritte berücksichtigt werden.

**21.** Verfahren nach einem der Ansprüche 13 bis 20,
**dadurch gekennzeichnet, dass**

- der Umrichter mit Hilfe eines Zustandraummodells gemäß

$$\hat{\underline{x}}'(k+1) = \underline{\Phi}\,\hat{\underline{x}}'(k) + \underline{\Gamma}\,\underline{u}(k)$$

$$\hat{\underline{y}}_d(k) = \underline{H}\,\hat{\underline{x}}'(k)$$

modelliert wird, wobei $\hat{\underline{x}}'(k)$ einem Zustandsvektor des Umrichters einschließlich verzögerten Zuständen, $\underline{u}(k)$ einem Vektor der Stellspannungen, $\underline{\Phi}$, $\underline{\Gamma}$ und $\underline{H}$ Modellmatrizen und $\hat{\underline{y}}_d(k)$ einem Vektor von mit Verzögerungen behafteten Zustandsmodellmesswerten entsprechen.

22. Verfahren nach einem der vorangehenden Ansprüche,
**dadurch gekennzeichnet, dass**

- Zustands-Zwischenkreisenergiewerte $\hat{\underline{w}}(k)$ mittels einer auf ein Signalmodell der Zwischenkreisenergiewerte zurück greifenden Schätzereinheit (21A) aus gemessenen Zwischenkreisenergiewerten ermittelt werden, wobei die Schätzereinheit (21A) die Parameter des Signalmodells der Zwischenkreisenergiewerte $\underline{w}(k)$ unter Ermittlung jeweils einer Zustands-Zwischenkreisenergiewerte $\hat{\underline{w}}(k)$ der positiv-seitigen und der negativ-seitigen Drehspannungsquelle des Umrichters (1) darstellenden Gleichgröße errechnet, und
- Zustands-Zwischenkreisenergiewerte $\hat{\underline{w}}(k)$ zusätzlich zu den Zustands-Stromwerten $\hat{\underline{x}}(k)$ der Regelungseinheit (16) zugeführt werden.

23. Verfahren nach Anspruch 22,
**dadurch gekennzeichnet, dass**

- die Zustands-Zwischenkreisenergiewerte der positiv-seitigen und der negativ-seitigen Leistungshalbleiterventilzweige (2) des Umrichters (1) jeweils für sich erfasst werden,
- mittels jeweils eines Parameter-Schätzers (33, 34, 35; 36, 37, 38) der Schätzereinheit (21A) die Parameter des Signalmodells der Zwischenenergiewerte $\underline{w}(k)$ errechnet werden,
- die jeweils einen Gleichanteil beschreibenden Parameter der positiv-seitigen und der negativ-seitigen Leistungshalbleiterventilzweige (2) jeweils für sich unter Bildung der Zwischenkreisenergie-Gleichgrößen addiert werden.

24. Verfahren nach Anspruch 23,
**dadurch gekennzeichnet, dass**

- Parameter-Schätzer mit rekursivem Algorithmus verwendet werden.

25. Verfahren nach Anspruch 23 oder 24,
**dadurch gekennzeichnet, dass**

- als Schätzer ein Parameter-Schätzer mit einem Schwingungsmodell $w(t)$ für die Zwischenkreisenergiewerte

$$w(t) = A_0 + A_{k1} * \cos(k\omega t) + A_{k2} * \sin(k\omega t) \quad \text{für } k=1 \text{ bis } n$$

verwendet wird,

- in dem $A_0$ den Gleichanteil der Zwischenkreisenergiewerte und $A_{k1}$ und $A_{k2}$ weitere Parameter des Schwingungsmodells sowie $\omega$ die Kreisfrequenz eines mit dem Umrichter (1) verbundenen Wechselspannungsnetzes angibt.

26. Verfahren nach Anspruch 24 oder 25,
**dadurch gekennzeichnet, dass**

- ein Schwingungsmodell mit zeitabhängigen Parametern $A_0(t)$ bis $A_{k2}(t)$ verwendet wird.

27. Verfahren nach Anspruch 26,
**dadurch gekennzeichnet, dass**

- die Zeitabhängigkeit der Parameter durch eine lineare Funktion oder eine Exponentialfunktion vorgegeben wird.

28. Verfahren nach Anspruch 24 oder 25,

**dadurch gekennzeichnet, dass**

- ein Schwingungsmodell mit zeitlich konstanten Parametern $A_0$ bis $A_{k2}$ verwendet wird.

**29.** Verfahren nach einem der vorangehenden Ansprüche,
**dadurch gekennzeichnet, dass** als Umrichter (1) ein Multilevel-Umrichter verwendet wird, der zu einer Brückenschaltung miteinander verbundene Leistungshalbleiterventilzweige (2) aufweist, wobei jeder Leistungshalbleiterventilzweige (2) aus einer Reihenschaltung von Submodulen (8) besteht und jedes Submodul (8) eine Schaltung (9) von Leistungshalbleitern sowie eine parallel dazu angeordnete Kondensatoreinheit (10) umfasst.

**30.** Anordnung zur Durchführung des Verfahrens nach einem der Ansprüche 1 bis 3 und 6 bis 29 Regeln eines Umrichters (1) mit einer Brückenschaltung von Phasenmodulzweigen mit jeweils einer Reihenschaltung von Submodulen mit jeweils einer Halbleiterschaltung mit angeschlossenem Kondensator, mit

- einer mit ihrem Eingang mit dem Messwerteausgang des Umrichters verbundenen Regelungseinheit (16), die an ihrem Ausgang Stellspannungswerte $\underline{u}(k)$ erzeugt, und
- einer der Regelungseinheit (16) nachgeordneten Steuerelektronik (19), die in Abhängigkeit der Stellspannungswerte $\underline{u}(k)$ Steuersignale bereitstellt und an die Leistungshalbleiter (S1, S2) des Umrichters (1) überträgt,

**dadurch gekennzeichnet, dass**

- zwischen dem Messwerteausgang des Umrichters (1) und dem Eingang der Regelungseinheit (16) eine Beobachtereinheit (21) liegt, die die Zustandsistwerte $\hat{\underline{x}}(k)$ ausgehend von den Stellspannungswerten $\underline{u}(k)$ und unter Berücksichtigung von gemessenen Stromwerten $\underline{x}(k)$ berechnet,
- zwischen dem Messwerteausgang des Umrichters (1) und dem Eingang der Regelungseinheit (16) eine Schätzereinheit (21A) liegt, die Zustandszwischenkreisenergieistwerte $\hat{\underline{w}}(k)$ unter Berücksichtigung von gemessenen Zwischenkreisenergiewerten $\underline{w}(k)$ der positiv-seitigen (2P) und der negativ-seitigen (2N) Drehspannungsquelle des Umrichters (1) berechnet, wobei die Beobachtereinheit (21) und die Schätzereinheit (21A) den Umrichter (1) modellieren, so dass die berechneten Zustandsstromistwerte $\hat{\underline{x}}(k)$ und Zustandszwischenkreisenergieistwerte $\hat{\underline{w}}(k)$ im eingeschwungenen Zustand den fehlerfreien Strom- und Zwischenkreisenergiewerten entsprechen, und die fehlerfreien Strom- und Zwischenkreisenergiewerte, $\hat{\underline{x}}(k)$, $\hat{\underline{w}}(k)$, einer als periodischer Regler mit periodisch-zeitvarianter Verstärkung ausgebildeten Regelungseinheit zugeführt werden.

**31.** Anordnung nach Anspruch 30,
**dadurch gekennzeichnet, dass**

- eine Beobachtereinheit (21) mit einem periodischzeitvarianten Systemmodell verwendet wird, das ausgehend von der allgemeinen Zustandsgleichung

$$\dot{\underline{x}} = \underline{A} \cdot \underline{x} + \underline{B} \cdot \underline{u}$$

mit $\underline{x}$ als Zustandsvariable, $\dot{\underline{x}}$ als zeitlicher Ableitung der Zustandsvariablen, $\underline{A}$ als Systemmatrix, $\underline{B}$ als Eingangsmatrix und u als Eingangsvariable eine zeitinvariante Systemmatrix $\underline{A}_{PLTV}$ und eine zeitvariante Eingangsmatrix $\underline{B}_{PLTV}(t)$ aufweist mit

$$\underline{x}_{PLTV} = \begin{pmatrix} \underline{x} \\ \underline{x}_{\alpha\beta} \\ \underline{x}_{dq^{-1}} \\ \underline{w}_{\alpha\beta} \\ \underline{w}_{dq^{-1}} \\ \underline{w} \end{pmatrix},$$

wobei x für den gemessenen, park-transformierten Strom, $\underline{x}_{\alpha\beta}$ für den alpha-beta-transformierten und $\underline{x}_{dq\text{-}1}$ für

den zweifach park-rücktransformierten gemessenen Strom (Gegensystem), $\underline{w}_{\alpha\beta}$ für die alpha-beta-transformierten, gemessenen Zwischenkreisenergiewertesummen von oberer und unterer Drehspannungsquelle und $\underline{w}_{dq\text{-}1}$ für die alpha-beta-transformierten, gemessenen Zwischenkreisenergiewertedifferenzen zwischen oberer und unterer Drehspannungsquelle und w für die gemessenen Zwischenkreisenergiewerte des gesamten Umrichters steht.

32. Anordnung zur Durchführung des Verfahrens nach einem der Ansprüche 4 und 5 sowie 6 bis 29 zum Regeln eines Umrichters (1) mit einer Brückenschaltung von Phasenmodulzweigen (2) mit jeweils einer Reihenschaltung von Submodulen (8) mit jeweils einer Halbleiterschaltung (9) mit angeschlossenem Kondensator (10), mit

- einer mit ihrem Eingang mit dem Messwerteausgang des Umrichters (1) verbundenen Regelungseinheit (16), die an ihrem Ausgang Stellspannungswerte $\underline{u}(k)$ erzeugt, und
- einer der Regelungseinheit (16) nachgeordneten Steuerelektronik (19), die in Abhängigkeit der Stellspannungswerte $\underline{u}(k)$ Steuersignale bereitstellt und an die Leistungshalbleiter (S1, S2) des Umrichters (1) überträgt,

**dadurch gekennzeichnet, dass**

- zwischen dem Messwerteausgang des Umrichters (1) und dem Eingang der Regelungseinheit (16) eine Beobachtereinheit (21) liegt, die die Zustandsistwerte $\hat{\underline{x}}(k)$ ausgehend von den Stellspannungswerten $\underline{u}(k)$ und unter Berücksichtigung von gemessenen Stromwerten $\underline{x}(k)$ berechnet,
- zwischen dem Messwerteausgang des Umrichters (1) und dem Eingang der Regelungseinheit (16) eine Schätzereinheit (21A) liegt, die Zustandszwischenkreisenergieistwerte $\hat{\underline{w}}(k)$ unter Berücksichtigung von gemessenen Zwischenkreisenergiewerten $\underline{w}(k)$ der positiv-seitigen (2P) und der negativ-seitigen (2N) Drehspannungsquelle des Umrichters (1) berechnet, wobei die Beobachtereinheit (21) und die Schätzereinheit (21A) den Umrichter (1) modellieren, so dass die berechneten Zustandsstromistwerte $\hat{\underline{x}}(k)$ und Zustandszwischenkreisenergiewerte der Gesamtenergie des Umrichters und der Differenz der Zwischenkreisenergiewerte $\underline{w}(k)$ der positiv-seitigen (2P) und der negativ-seitigen (2N) Drehspannungsquelle des Umrichters (1) im eingeschwungenen Zustand den fehlerfreien Strom- und Zwischenkreisenergiewerten entsprechen, und die fehlerfreien Strom- $\hat{\underline{x}}(k)$ und Zwischenkreisenergiewerte $\hat{\underline{x}}(k)$ einer als periodischer Regler mit periodisch-zeitvarianter Verstärkung ausgebildeten Regelungseinheit zugeführt werden.

33. Anordnung nach Anspruch 30 oder 31,
**dadurch gekennzeichnet, dass** eine ausgangsseitig mit einer dem periodischen Regler (16) vorgeordneten Summierschaltung (15) verbundene periodische Vorsteuereinheit (14') eine der Periode des Wechselstroms entsprechende Periode aufweist.

34. Anordnung nach einem der Ansprüchen 30 oder 33,
**dadurch gekennzeichnet, dass** der periodische Regler (16) so ausgebildet ist, dass seine periodisch-zeitvariante Verstärkung mittels periodischen Umschaltens seiner Reglermatrizen erfolgt.

35. Anordnung nach einem der Ansprüche 30 bis 34,
**dadurch gekennzeichnet, dass**

- die Beobachtereinheit (21) so ausgestattet ist, dass sie Zustandsistwerte $\hat{\underline{x}}(k)$ ausgehend von den Stellspannungswerten $\underline{u}(k)$ und Zustandsmesswerten $\underline{y}_d(k)$ unter Berücksichtigung von Störeffekten und/oder Verzögerungseffekten derart berechnet, dass die Zustandsistwerte $\hat{\underline{x}}(k)$ von Störungseffekte befreiten und/oder ungestörten Strommesswerten im eingeschwungenen Zustand entsprechen.

36. Anordnung nach einem der Ansprüche 30 bis 35,
**dadurch gekennzeichnet, dass**

- an den Ausgang des Umrichters (1) die das Signalmodell von Zwischenkreisenergiewerten $\underline{w}(k)$ nachbildende Schätzereinheit (21A) angeschlossen ist und
- die Beobachtereinheit (21) und die Schätzereinheit (21A) ausgangsseitig mit Ist-Eingängen der Regelungseinheit (16) verbunden sind.

37. Anordnung nach Anspruch 36,

- bei einem Umrichter (1) mit sechs Leistungshalbleiterventilzweigen (2) die Schätzereinheit (21A) für jeden der drei positiv-seitigen Leistungshalbleiterventilzweige (2) jeweils einen Schätzer (33, 34, 35) und für jeden der drei negativ-seitigen Leistungshalbleiterventilzweige (2) jeweils einen weiteren Schätzer (36, 37, 38) aufweist.

**38.** Anordnung nach einem der Ansprüche 30 bis 37,

- die Beobachtereinheit (21) eine den Umrichter (1) nach bildende Modelleinheit (22) aufweist, die mit ihrem einen Eingang mit dem Ausgang der Regelungseinheit (16) und mit ihrem anderen Eingang mit dem Ausgang einer Rückführungseinheit (25) verbunden ist,
- die Rückführungseinheit (25) mit dem Ausgang einer Summierschaltung (24) verbunden ist, die mit ihrem einen Eingang an den Ausgang des Umrichters (1) und mit ihrem weiteren Eingang an den Ausgang einer Ausschneideeinheit (23) angeschlossen ist, wobei die Ausschneideeinheit (23) mit dem Ausgang der Modelleinheit (22) verbunden ist, und
- der Ausgang der Modelleinheit (22) über eine weitere Ausschneideeinheit (26) mit dem Eingang der Regelungseinheit (16) verbunden ist.

**39.** Anordnung nach einem der Ansprüche 30 bis 38,
**dadurch gekennzeichnet, dass**

- der Umrichter (1) ein Multilevel-Umrichter ist, der zu einer Brückenschaltung miteinander verbundene Leistungshalbleiterventilzweige (2) aufweist, wobei jeder Leistungshalbleiterventilzweig (2) aus einer Reihenschaltung von Submodulen (8) besteht und jedes Submodul (8) eine Schaltung (9) von Leistungshalbleitern sowie eine parallel dazu angeordnete Kondensatoreinheit (10) umfasst.

## Claims

**1.** Method for controlling a converter (1) having controllable power semiconductors, wherein

- actual state values $\hat{\underline{x}}(k)$ describing the state of the converter (1) are compared with desired state values $\underline{x}_{desired}(k)$, with control difference values being obtained,
- the control difference values are fed to a control unit (16), which generates actuating voltage values $\underline{u}(\boldsymbol{k})$ at its output, and
- control electronics (19) provide control signals depending on the actuating voltage values $\underline{u}(\boldsymbol{k})$ and transmit said control signals to the power semiconductors (S1, S2) of the converter (1), wherein the control unit (16) generates actuating voltage values $\underline{u}(\boldsymbol{k})$ such that the control difference values become as small as possible,
- the actual state values $\hat{\underline{x}}(\boldsymbol{k})$ are calculated by an observer unit (21) proceeding from the actuating voltage values $\underline{u}(\boldsymbol{k})$ and taking account of measured current values $\underline{x}(\boldsymbol{k})$,

**characterized in that**

- actual state intermediate circuit energy values $\hat{\underline{w}}(\boldsymbol{k})$ are calculated by an estimator unit (21A) taking account of measured intermediate circuit energy values $\underline{w}(\boldsymbol{k})$ of the positive-side (2P) and of the negative-side (2N) three-phase voltage source of the converter (1), wherein the observer unit (21) and the estimator unit (21A) model the converter (1), such that the calculated actual state current values $\hat{\underline{x}}(\boldsymbol{k})$ and actual state intermediate circuit energy values $\hat{\underline{w}}(\boldsymbol{k})$ in the steady state correspond to the fault-free current and intermediate circuit energy values, and
- the fault-free current and intermediate circuit energy values $\hat{\underline{x}}(\boldsymbol{k})$, $\hat{\underline{w}}(\boldsymbol{k})$ are fed to the control unit (16) embodied as a periodic controller having a periodically time-variant gain.

**2.** Method according to Claim 1,
**characterized in that**

- the observer unit (21) having a periodically time-variant system model is used, which model, proceeding from the general state equation

$$\dot{\underline{x}} = \underline{A} \cdot \underline{x} + \underline{B} \cdot \underline{u}$$

with $\underline{x}$ as state variable, $\dot{\underline{x}}$ as time derivative of the state variable, $\underline{A}$ as system matrix, $\underline{B}$ as input matrix and $\underline{u}$ as input variable, has a time-invariant system matrix $\underline{A}_{PLTV}$ and a time-variant input matrix $\underline{B}_{PLTV}(t)$ with

$$\underline{x}_{PLTV} = \begin{pmatrix} \underline{x} \\ \underline{x}_{\alpha\beta} \\ \underline{x}_{dq^{-1}} \\ \underline{w}_{\alpha\beta} \\ \underline{w}_{dq^{-1}} \\ \underline{w} \end{pmatrix},$$

where $\underline{x}$ denotes the measured, Park-transformed current, $\underline{x}_{\alpha\beta}$ denotes the alpha-beta-transformed current and $\underline{x}_{dq\text{-}1}$ denotes the doubly Park-inverse-transformed measured current (negative phase sequence system), $\underline{w}_{\alpha\beta}$ denotes the alpha-beta-transformed, measured intermediate circuit energy value sums of upper and lower three-phase voltage sources and $\underline{w}_{dq\text{-}1}$ denotes the alpha-beta-transformed, measured intermediate circuit energy value differences between upper and lower three-phase voltage sources, and $\underline{w}$ denotes the measured intermediate circuit energy values of the entire converter.

3. Method according to Claim 1 or 2,
**characterized in that**
the desired state values are desired current values $\underline{x}_{desired}(k)$ and desired intermediate circuit energy values $\underline{w}_{desired}(k)$.

4. Method for controlling a converter (1) having controllable power semiconductors, wherein

- actual state values $\hat{\underline{x}}(k)$ describing the state of the converter (1) are compared with desired state values $\underline{x}_{desired}(k)$, with control difference values being obtained,
- the control difference values are fed to a control unit (16), which generates actuating voltage values $\underline{u}(\boldsymbol{k})$ at its output, and
- control electronics (19) provide control signals depending on the actuating voltage values $\underline{u}(\boldsymbol{k})$ and transmit said control signals to the power semiconductors (S1, S2) of the converter (1), wherein the control unit (16) generates actuating voltage values $\underline{u}(\boldsymbol{k})$ such that the control difference values become as small as possible,

**characterized in that**

- the actual state values $\hat{\underline{x}}(\boldsymbol{k})$ are calculated by an observer unit (21) proceeding from the actuating voltage values $\underline{u}(\boldsymbol{k})$ and taking account of measured current values $\underline{x}(\boldsymbol{k})$,
- actual state intermediate circuit energy values $\hat{\underline{w}}(\boldsymbol{k})$ are calculated by an estimator unit (21A) taking account of measured intermediate circuit energy values $\underline{w}(\boldsymbol{k})$ of the positive-side (2P) and of the negative-side (2N) three-phase voltage source of the converter (1), wherein the observer unit (21) and the estimator unit (21A) model the converter (1), such that the calculated actual state current values $\hat{\underline{x}}(\boldsymbol{k})$ and state intermediate circuit energy values of the total energy of the converter and the difference in the intermediate circuit energy values $\underline{w}(\boldsymbol{k})$ of the positive-side (2P) and of the negative-side (2N) three-phase voltage source of the converter (1) in the steady state correspond to the fault-free current and intermediate circuit energy values, and

the fault-free current $\hat{\underline{x}}(\boldsymbol{k})$ and intermediate circuit energy values $\hat{\underline{x}}(\boldsymbol{k})$ are fed to a control unit embodied as a periodic controller having a periodically time-variant gain.

5. Method according to Claim 4,
**characterized in that**

- the desired state values are desired current values $\underline{x}_{desired}(k)$ and desired intermediate circuit energy values.

6. Method according to any of the preceding claims,

**characterized in that**

- the desired state values are formed from predefined desired values by means of a periodically operating feed forward control unit (N).

7. Method according to any of the preceding claims,
   **characterized in that**

   - in the periodic controller the periodically time-variant gain is implemented by means of periodic changeover of controller matrices.

8. Method according to any of the preceding claims,
   **characterized in that**

   - the observer unit (21) takes account of disturbance effects, such that the actual state current values $\hat{\underline{x}}(\boldsymbol{k})$ in the steady state correspond to the current measurement values freed of disturbance effects.

9. Method according to Claim 8,
   **characterized in that**

   - the observer unit (21) provides, besides the actual state current values $\hat{\underline{x}}(\boldsymbol{k})$ that are fault-free in the steady state, disturbed state model measurement values $\hat{\underline{y}}_d(\boldsymbol{k})$ corresponding to measurable state measurement values $\underline{y}_d(\boldsymbol{k})$, wherein the state model measurement values $\hat{\underline{y}}_d(\boldsymbol{k})$, are compared with state measurement values $\underline{y}_d(\boldsymbol{k})$ obtained by measurements, with a model measurement value deviation being obtained, the model measurement value deviation is fed to the model unit (22) on the input side and the modeling is carried out such that the model measurement value deviation becomes as small as possible.

10. Method according to Claim 9,
    **characterized in that**

    - the model measurement value deviation is fed to the model unit (22) via a feedback unit (25), which amplifies the model measurement value deviation.

11. Method according to either of Claims 8 and 10,
    **characterized in that**

    - taking account of disturbance effects comprises taking account of faults originating from an electrical power supply system connected to the converter (1) and taking account of faults caused by the converter (1).

12. Method according to any of Claims 8 to 11,
    **characterized in that**

    - the observer unit (21) is modeled with the aid of a state space model in accordance with

$$\hat{\underline{x}}'_\rho(k+1) = \underline{\Phi}_\rho \cdot \hat{\underline{x}}'_\rho(k) + \underline{\Gamma}\underline{u}_\rho(k)$$

$$\hat{\underline{y}}_d(k) = \underline{H}_\rho \cdot \hat{\underline{x}}'_\rho(k)$$

wherein $\hat{\underline{x}}_\rho(\boldsymbol{k})$ corresponds to a state vector of $\underline{u}_\rho(\boldsymbol{k})$ converter (1) including disturbed states, corresponds to a vector of the actuating voltages, $\underline{\Phi}$, $\underline{\Gamma}$ and $H$ correspond to model matrices, and $\hat{\underline{y}}_d(\boldsymbol{k})$ corresponds to a vector of state model measurement values beset by disturbances.

13. Method according to any of the preceding claims,
    **characterized in that**

    - the observer unit (21) takes account of delay effects, such that the actual state current values $\hat{\underline{x}}(\boldsymbol{k})$ correspond

to undelayed and undisturbed current measurement values freed of disturbance and delay effects.

14. Method according to Claim 13,
**characterized in that**

- the observer unit (21) provides, besides the undelayed actual state values $\hat{\underline{x}}(\boldsymbol{k})$, delayed state model measurement values $\hat{\underline{y}}_d(\boldsymbol{k})$ corresponding to measurable state measurement values $\underline{y}_d(\boldsymbol{k})$, wherein the state model measurement values $\hat{\underline{y}}_d(\boldsymbol{k})$ are compared with state measurement values $\underline{y}_d(\boldsymbol{k})$ obtained by measurements, with a model measurement value deviation being obtained, the model measurement value deviation is fed to the model unit (22) on the input side and the modeling is carried out such that the model measurement value deviation becomes as small as possible.

15. Method according to Claim 13 or 14,
**characterized in that**

- the model measurement value deviation is fed to the model unit (22) via a feedback unit (25), which amplifies the model measurement value deviation.

16. Method according to any of Claims 13 to 15,
**characterized in that**

- taking account of delay effects comprises taking account of measurement delays that arise during the digital detection of the state variables of the converter (1) and taking account of actuating delays caused by the control electronics (19).

17. Method according to any of Claims 13 to 16,
**characterized in that**

- during the detection of the state measurement values $\underline{y}_d(\boldsymbol{k})$, the state variable of the converter (1) is measured, the measurement signals obtained in this case are continuously sampled in sampling steps, with samples being obtained, and the samples are subsequently digitized, wherein the modeling of the measurement delays established in this case is effected under the assumption that the measurement delay corresponds to a time duration of a plurality of sampling steps.

18. Method according to Claim 17,
**characterized in that**
a measurement delay of four sampling steps is taken into account.

19. Method according to any of Claims 13 to 18,
**characterized in that**

- an actuating delay $\tau$ is modeled in accordance with

$$\tau = (l-1)\cdot \mathrm{T} + \tau'$$

wherein $l$ corresponds to the number of sampling steps whose sum is less than the actuating delay $\tau$, and $\tau'$ as remainder is shorter than the time duration T between two sampling steps k.

20. Method according to Claim 19,
**characterized in that**
two sampling steps are taken into account during the modeling of the actuating delay.

21. Method according to any of Claims 13 to 20, **characterized in that**

- the converter is modeled with the aid of a state space model in accordance with

$$\hat{\underline{x}}'(k+1) = \underline{\Phi}\hat{\underline{x}}'(k) + \underline{\Gamma}u(k)$$

$$\hat{\underline{y}}_d(k) = \underline{H}\hat{\underline{x}}'(k)$$

wherein $\hat{\underline{x}}'(k)$ corresponds to a state vector of the converter including delayed states, $\underline{u}(k)$ corresponds to a vector of the actuating voltages, $\underline{\Phi}$, $\underline{\Gamma}$ and $\underline{H}$ correspond to model matrices, and $\hat{\underline{y}}_d(k)$ corresponds to a vector of state model measurement values beset by delays.

22. Method according to any of the preceding claims
**characterized in that**

- state intermediate circuit energy values $\hat{\underline{w}}(k)$ are determined from measured intermediate circuit energy values by means of an estimator unit (21A) that has recourse to a signal model of the intermediate circuit energy values, wherein the estimator unit (21A) calculates the parameters of the signal model of the intermediate circuit energy values $\underline{w}(k)$ whilst determining in each case a DC variable representing state intermediate circuit energy values $\hat{\underline{w}}(k)$ of the positive-side and of the negative-side three-phase voltage source of the converter (1), and
- state intermediate circuit energy values $\hat{\underline{w}}(k)$ are fed to the control unit (16) in addition to the state current values $\hat{\underline{x}}(k)$.

23. Method according to Claim 22,
**characterized in that**

- the state intermediate circuit energy values of the positive-side and of the negative-side power semiconductor valve branches (2) of the converter (1) are respectively individually detected,
- the parameters of the signal model of the intermediate energy values $\underline{w}(k)$ are calculated by means of a respective parameter estimator (33, 34, 35; 36, 37, 38) of the estimator unit (21A),
- the parameters of the positive-side and of the negative-side power semiconductor valve branches (2) that respectively describe a DC component are respectively individually added to form the intermediate circuit energy DC variables.

24. Method according to Claim 23,
**characterized in that**

- parameter estimators with a recursive algorithm are used.

25. Method according to Claim 23 or 24,
**characterized in that**

- as estimator a parameter estimator with an oscillation model $w(t)$ for the intermediate circuit energy values $\mathbf{w(t) = A_0 + A_{k1}{}^*cos\,(k\omega t) + A_{k2}{}^*sin(k\omega t)}$ for k = 1 to n is used,

- in which $A_0$ indicates the DC component of the intermediate circuit energy values and $A_{k1}$ and $A_{k2}$ indicate further parameters of the oscillation model and $\omega$ indicates the angular frequency of an AC voltage power supply system connected to the converter (1).

26. Method according to Claim 24 or 25,
**characterized in that**

- an oscillation model with time-dependent parameters $A_0$ (t) to $A_{k2}$ (t) is used.

27. Method according to Claim 26,
**characterized in that**

- the time dependence of the parameters is predefined by a linear function or an exponential function.

28. Method according to Claim 24 or 25,
    **characterized in that**

    - an oscillation model with temporally constant parameters $A_0$ to $A_{k2}$ is used.

29. Method according to any of the preceding claims,
    **characterized in that**
    the converter (1) used is a multilevel converter having power semiconductor valve branches (2) connected to one another to form a bridge circuit, wherein each power semiconductor valve branch (2) consists of a series circuit formed by submodules (8) and each submodule (8) comprises a circuit (9) formed by power semiconductors and also a capacitor unit (10) arranged in parallel therewith.

30. Arrangement for carrying out Method according to any of Claims 1 to 3 and 6 to 29 for controlling a converter (1) having a bridge circuit formed by phase module branches each having a series circuit formed by submodules each having a semiconductor circuit with a connected capacitor, comprising

    - a control unit (16) connected by its input to the measurement value output of the converter, said control unit generating actuating voltage values $\underline{u}(k)$ at its output, and
    - control electronics (19) disposed downstream of the control unit (16), said control electronics providing control signals in a manner dependent on the actuating voltage values $\underline{u}(k)$ and transmitting said control signals to the power semiconductors (S1, S2) of the converter (1),

    **characterized in that**

    - an observer unit (21) is situated between the measurement value output of the converter (1) and the input of the control unit (16), said observer unit calculating the actual state values $\hat{\underline{x}}(k)$, proceeding from the actuating voltage values $\underline{u}(k)$ and taking account of measured current values $\underline{x}(k)$,
    - an estimator unit (21A) is situated between the measurement value output of the converter (1) and the input of the control unit (16), said estimator unit calculating actual state intermediate circuit energy values $\hat{\underline{w}}(k)$, taking account of measured intermediate circuit energy values $w(k)$ of the positive-side (2P) and of the negative-side (2N) three-phase voltage source of the converter (1), wherein the observer unit (21) and the estimator unit (21A) model the converter (1), such that the calculated actual state current values $\hat{\underline{x}}(k)$ and actual state intermediate circuit energy values $\hat{\underline{w}}(k)$ in the steady state correspond to the fault-free current and intermediate circuit energy values, and the fault-free current and intermediate circuit energy values $\hat{\underline{x}}(k)$, $\hat{\underline{w}}(k)$ are fed to a control unit embodied as a periodic controller having a periodically time-variant gain.

31. Arrangement according to Claim 30,
    **characterized in that**

    - an observer unit (21) having a periodically time-variant system model is used, which model, proceeding from the general state equation

$$\dot{\underline{x}} = \underline{A} \cdot \underline{x} + \underline{B} \cdot \underline{u}$$

    with $\underline{x}$ as state variable, $\dot{\underline{x}}$ as time derivative of the state variable, $\underline{A}$ as system matrix, $\underline{B}$ as input matrix and u as input variable, has a time-invariant system matrix $\underline{A}_{PLTV}$ and a time-variant input matrix $\underline{B}_{PLTV}(t)$ with

$$\underline{x}_{PLTV} = \begin{pmatrix} \underline{x} \\ \underline{x}_{\alpha\beta} \\ \underline{x}_{dq^{-1}} \\ \underline{w}_{\alpha\beta} \\ \underline{w}_{dq^{-1}} \\ \underline{w} \end{pmatrix},$$

where $\underline{x}$ denotes the measured, Park-transformed current, $\underline{x}_{\alpha\beta}$ denotes the alpha-beta-transformed current and $\underline{x}_{dq-1}$ denotes the doubly Park-inverse-transformed measured current (negative phase sequence system), $\underline{w}_{\alpha\beta}$ denotes the alpha-beta-transformed, measured intermediate circuit energy value sums of upper and lower three-phase voltage sources and $\underline{w}_{dq-1}$ denotes the alpha-beta-transformed, measured intermediate circuit energy value differences between upper and lower three-phase voltage sources, and $\underline{w}$ denotes the measured intermediate circuit energy values of the entire converter.

32. Arrangement for carrying out Method according to any of Claims 4 and 5 and 6 to 29 for controlling a converter (1) having a bridge circuit formed by phase module branches (2) each having a series circuit formed by submodules (8) each having a semiconductor circuit (9) with a connected capacitor (10), comprising

- a control unit (16) connected by its input to the measurement value output of the converter (1), said control unit generating actuating voltage values $\underline{u}(k)$ at its output, and
- control electronics (19) disposed downstream of the control unit (16), said control electronics providing control signals in a manner dependent on the actuating voltage values $\underline{u}(k)$ and transmitting said control signals to the power semiconductors (S1, S2) of the converter (1),

**characterized in that**

- an observer unit (21) is situated between the measurement value output of the converter (1) and the input of the control unit (16), said observer unit calculating the actual state values $\hat{x}(k)$, proceeding from the actuating voltage values $\underline{u}(k)$ and taking account of measured current values $\underline{x}(k)$,
- an estimator unit (21A) is situated between the measurement value output of the converter (1) and the input of the control unit (16), said estimator unit calculating actual state intermediate circuit energy values $\hat{w}(k)$, taking account of measured intermediate circuit energy values $\underline{w}(k)$ of the positive-side (2P) and of the negative-side (2N) three-phase voltage source of the converter (1), wherein the observer unit (21) and the estimator unit (21A) model the converter (1), such that the calculated actual state current values $\hat{x}(k)$ and state intermediate circuit energy values of the total energy of the converter and the difference in the intermediate circuit energy values $\underline{w}(k)$ of the positive-side (2P) and of the negative-side (2N) three-phase voltage source of the converter (1) in the steady state correspond to the fault-free current and intermediate circuit energy values, and the fault-free current $\hat{x}(k)$ and intermediate circuit energy values $\hat{x}(k)$ are fed to a control unit embodied as a periodic controller having a periodically time-variant gain.

33. Arrangement according to Claim 30 or 31,
**characterized in that**
a periodic feed forward control unit (14') connected on the output side to a summing circuit (15) disposed upstream of the periodic controller (16) has a period corresponding to the period of the AC current.

34. Arrangement according to either of Claims 30 and 33,
**characterized in that**
the periodic controller (16) is designed such that its periodically time-variant gain is effected by means of periodic changeover of its controller matrices.

35. Arrangement according to any of Claims 30 to 34,
**characterized in that**

- the observer unit (21) is equipped such that it calculates actual state values $\hat{\underline{x}}(\boldsymbol{k})$ proceeding from the actuating voltage values $\underline{u}(k)$ and state measurement values $\underline{y}_d(\boldsymbol{k})$ taking account of disturbance effects and/or delay effects in such a way that the actual state values $\hat{\underline{x}}(k)$ correspond to current measurement values that are freed of disturbance effects and/or undisturbed in the steady state.

36. Arrangement according to any of Claims 30 to 35,
   **characterized in that**

   - an estimator unit (21A) that simulates the signal model of intermediate circuit energy values $\underline{w}(k)$ is connected to the output of the converter (1), and
   - the observer unit (21) and the estimator unit (21A) are connected on the output side to actual inputs of the control unit (16).

37. Arrangement according to Claim 36,

   - in the case of a converter (1) comprising six power semiconductor valve branches (2), the estimator unit (21A) has a respective estimator (33, 34, 35) for each of the three positive-side power semiconductor valve branches (2) and a respective further estimator (36, 37, 38) for each of the three negative-side power semiconductor valve branches (2).

38. Arrangement according to any of Claims 30 to 37,

   - the observer unit (21) has a model unit (22), which simulates the converter (1) and which is connected by one of its inputs to the output of the control unit (16) and by its other input to the output of a feedback unit (25),
   - the feedback unit (25) is connected to the output of a summing circuit (24), which is connected by one of its inputs to the output of the converter (1) and by its further input to the output of a cut-out unit (23), wherein the cut-out unit (23) is connected to the output of the model unit (22) and
   - the output of the model unit (22) is connected to the input of the control unit (16) via a further cut-out unit (26).

39. Arrangement according to any of Claims 30 to 38,
   **characterized in that**

   - the converter (1) is a multilevel converter having power semiconductor valve branches (2) connected to one another to form a bridge circuit, wherein each power semiconductor valve branch (2) consists of a series circuit formed by submodules (8) and each submodule (8) comprises a circuit (9) formed by power semiconductors and also a capacitor unit (10) arranged in parallel therewith.

**Revendications**

1. Procédé de régulation d'un convertisseur (1) ayant un semi-conducteur de puissance pouvant être commandé, dans lequel

   - on compare des valeurs $\hat{\underline{x}}(\boldsymbol{k})$ réelles d'état, qui décrivent l'état du convertisseur (1) à des valeurs $\underline{x}_{Soll}(\boldsymbol{k})$ de consigne d'état en obtenant des valeurs de différences de régulation,
   - on envoie les valeurs de différence de régulation à une unité (16) de régulation, qui produit, à sa sortie, des valeurs $\boldsymbol{u}(\boldsymbol{k})$ de tension de réglage et
   - une électronique (19) de commande met, en fonction des valeurs $\boldsymbol{u}(\boldsymbol{k})$ de tension de réglage, à disposition des signaux de commande et les transmet aux semi-conducteurs (S1, S2) de puissance du convertisseur (1), l'unité (16) de régulation produisant des valeurs $\boldsymbol{u}(\boldsymbol{k})$ de tension de réglage telles que les valeurs de différence de régulation deviennent aussi petites que possible,
   - on calcule les valeurs $\hat{\boldsymbol{x}}(\boldsymbol{k})$ réelles d'état par une unité (21) d'observateur à partir des valeurs $\underline{u}(\boldsymbol{k})$ de tension de réglage et en tenant compte de valeurs $\underline{x}(\boldsymbol{k})$ de courant mesurées,

   **caractérisé en ce que**

   - on calcule des valeurs $\hat{\underline{w}}(\boldsymbol{k})$ réelles d'état d'énergie de circuit intermédiaire par une unité (21A) d'estimateur en tenant compte des valeurs $\underline{w}(\boldsymbol{k})$ d'énergie de circuit intermédiaire mesurées de la source de tension tournante, du côté (2P) positif et du côté (2N) négatif, du convertisseur, l'unité (21) d'observateur et l'unité (21A) d'estimateur modélisant le convertisseur (1), de manière à ce que les valeurs $\hat{\underline{x}}(k)$ réelles de courant d'état calculées et des valeurs $\hat{\underline{w}}(k)$ réelles d'état d'énergie de circuit intermédiaire correspondent en régime permanent aux valeurs sans erreur de courant et d'énergie de circuit intermédiaire et

- on envoie les valeurs $\hat{\underline{x}}(k)$, $\hat{\underline{w}}(k)$ sans erreur de courant et d'énergie de circuit intermédiaire à l'unité (16) de régulation constituée en régleur périodique à amplification variant périodiquement dans le temps.

2.  Procédé suivant la revendication 1,
    **caractérisé en ce que**

    - on utilise l'unité (21) d'observateur avec un modèle de système variant périodiquement dans le temps, qui, à partir de l'équation d'état général

    $$\dot{\underline{x}} = \underline{A} \cdot \underline{x} + \underline{B} \cdot \underline{u}$$

    $\underline{x}$ étant une variable d'état, $\dot{\underline{x}}$ étant une dérivée en fonction du temps de la variable d'état, $\underline{A}$ étant une matrice de système, $\underline{B}$ étant une matrice d'entrée et $\underline{u}$ étant une variable d'entrée, a une matrice $\underline{A_{PLTV}}$ de système invariante dans le temps et une matrice $\underline{B_{PLTV}}(t)$ d'entrée variante dans le temps avec

    $$\underline{x}_{PLTV} = \begin{bmatrix} \underline{x} \\ \underline{x}_{\alpha\beta} \\ \underline{x}_{dq^{-1}} \\ \underline{w}_{\alpha\beta} \\ \underline{w}_{dq^{-1}} \\ \underline{w} \end{bmatrix},$$

    dans laquelle $\underline{x}$ est le courant mesuré à transformation park, $\underline{x}_{\alpha\beta}$ est le courant mesuré à transformation alpha-beta et $\underline{x}_{dq-1}$ le courant mesuré à retransformation park deux fois (système contraire), $\underline{w}_{\alpha\beta}$ est les sommes de valeurs d'énergie de circuit intermédiaire mesurées et à transformation alpha-beta de la source de tension tournante supérieure et inférieure et $\underline{w}_{dq-1}$ représente les différences de valeurs d'énergie de circuit intermédiaire mesurées et la transformation alpha-beta entre la source de tension de rotation supérieure et inférieure et $\underline{w}$ représente les valeurs d'énergie de circuit intermédiaire mesurées de tout le convertisseur.

3.  Procédé suivant la revendication 1 ou 2,
    **caractérisé en ce que**
    les valeurs de consigne d'état sont des valeurs $\underline{x}_{Soll}(k)$ de consigne de courant et des valeurs $\underline{w}_{soll}(k)$ de consigne d'énergie de circuit intermédiaire.

4.  Procédé de régulation d'un convertisseur (1) ayant un semi-conducteur de puissance pouvant être commandé, dans lequel

    - on compare des valeurs $\hat{\underline{x}}(k)$ réelles d'état, qui décrivent l'état du convertisseur (1) à des valeurs $\underline{x}_{Soll}(k)$ de consigne d'état en obtenant des valeurs de différences de régulation,
    - on envoie les valeurs de différence de régulation à une unité (16) de régulation, qui produit, à sa sortie, des valeurs $\underline{u}(k)$ de tension de réglage et
    - une électronique (19) de commande met, en fonction des valeurs $\underline{u}(k)$ de tension de réglage, à disposition des signaux de commande et les transmet aux semi-conducteurs (S1, S2) de puissance du convertisseur (1), l'unité (16) de régulation produisant des valeurs $\underline{u}(k)$ de tension de réglage telles que les valeurs de différence de régulation deviennent aussi petites que possible,

    **caractérisé en ce que**

    - on calcule les valeurs $\hat{\underline{x}}(k)$ réelles d'état par une unité (21) d'observateur à partir des valeurs $\underline{u}(k)$ de tension de réglage et en tenant compte de valeurs $\underline{x}(k)$ de courant mesurées,
    - on calcule des valeurs $\hat{\underline{w}}(k)$ réelles d'état d'énergie de circuit intermédiaire par une unité (21A) d'estimateur en tenant compte de valeurs $\underline{w}(\boldsymbol{k})$ d'énergie de circuit intermédiaire mesurées de la source de tension de rotation, du côté (2P) positif et du côté (2N) négatif, du convertisseur (1), l'unité (21) d'observateur et l'unité (21A) d'estimateur modélisant le convertisseur (1), de manière à ce que les valeurs $\hat{\underline{x}}(\boldsymbol{k})$ réelles de courant d'état calculées et les valeurs d'état d'énergie de circuit intermédiaire de l'énergie totale du convertisseur et la différence des valeurs $\hat{\underline{w}}(\boldsymbol{k})$ d'énergie de circuit intermédiaire de la source de tension tournante, du côté (2P) positif et du côté (2N) négatif, du convertisseur (1) correspondent en régime permanent aux valeurs de courant et d'énergie de circuit intermédiaire sans erreur et

- on envoie les valeurs $\hat{\underline{x}}(\boldsymbol{k})$ de courant et les valeurs $\hat{\underline{w}}(\boldsymbol{k})$ d'énergie de circuit intermédiaire sans erreur à une unité de régulation constituée en régleur périodique à amplification variant périodiquement dans le temps.

5. Procédé suivant la revendication 4,
   **caractérisé en ce que**

   - les valeurs de consigne d'état sont des valeurs $\underline{w}_{Soll}(k)$ de consigne de courant et des valeurs de consigne d'énergie de circuit intermédiaire.

6. Procédé suivant l'une des revendications précédentes, **caractérisé en ce que**

   - on forme les valeurs de consigne d'état au moyen d'un unité (N) pilote fonctionnant périodiquement à partir de valeurs de consigne données à l'avance.

7. Procédé suivant l'une des revendications précédentes, **caractérisé en ce que**

   - pour le régleur périodique, on effectue l'amplification variant dans le temps périodiquement au moyen d'une commutation périodique de matrices de régleur.

8. Procédé suivant l'une des revendications précédentes, **caractérisé en ce que**

   - l'unité (21) d'observateur tient compte d'effets de perturbation, de manière à ce que les valeurs $\hat{\underline{x}}(\boldsymbol{k})$ réelles de courant d'état correspondent en régime permanent aux valeurs de mesure du courant débarrassées d'effets de perturbation.

9. Procédé suivant la revendication 8,
   **caractérisé en ce que**

   - l'unité (21) d'observateur met à disposition, outre les valeurs $\hat{\underline{x}}(\boldsymbol{k})$ réelles de courant d'état sans erreur en régime permanent, des valeurs $\hat{\underline{y}}_d(\boldsymbol{k})$ de mesure de modèle d'état perturbées, qui correspondent à des valeurs $\underline{y}_d(\boldsymbol{k})$ de mesure d'état mesurables, les valeurs $\hat{\underline{y}}_d(\boldsymbol{k})$ de mesure de modèle d'état étant comparées à des valeurs $\underline{y}_d(\boldsymbol{k})$ de mesure d'état obtenues par des mesures en obtenant un écart de valeurs de mesure de modèle, l'écart de valeurs de mesure de modèle est envoyé du côté de l'entrée à l'unité (22) de modélisation et la modélisation est effectuée de manière à rendre aussi petit que possible l'écart de valeurs de mesure de modèle.

10. Procédé suivant la revendication 4,
    **caractérisé en ce que**

    - l'écart de valeurs de mesure de modèle de l'unité (22) de modélisation est envoyé à une unité (25) de contreréaction, qui amplifie l'écart de valeurs de mesure de modèle.

11. Procédé suivant l'une des revendications 8 ou 9,
    **caractérisé en ce que**

    - la prise en compte d'effets de perturbation comprend la prise en compte d'erreurs, qui repose sur un réseau d'alimentation en énergie électrique relié au convertisseur (1) et la prise en compte d'erreurs, qui sont provoquées par le convertisseur (1).

12. Procédé suivant l'une des revendications 8 à 11,
    **caractérisé en ce que**

- on modélise l'unité (21) d'observateur à l'aide d'un modèle d'espace d'état suivant

$$\hat{\underline{x}}_\rho(k+1) = \underline{\Phi}_\rho \cdot \hat{\underline{x}}_\rho(k) + \underline{\Gamma}\underline{u}_\rho(k)$$

$$\hat{\underline{y}}_d(k) = \underline{H}_\rho \cdot \hat{\underline{x}}_\rho(k)$$

dans lesquelles $\hat{\underline{x}}_\rho(\boldsymbol{k})$ est un vecteur d'état du convertisseur (1) incluant des états perturbés, $\underline{\boldsymbol{u}}_\rho(\boldsymbol{k})$ un vecteur des tensions de réglage, $\underline{\Phi}$, $\underline{\Gamma}$ et $\underline{H}$ des matrices de modèle et $\hat{\underline{\boldsymbol{y}}}_d(\boldsymbol{k})$ un vecteur de valeurs de mesure de modèle d'état entachées de perturbations.

13. Procédé suivant l'une des revendications précédentes, **caractérisé en ce que**

- l'unité (21) d'observateur tient compte d'effets de retard, de manière à ce que les valeurs $\hat{\underline{x}}(\boldsymbol{k})$ réelles de courant d'état correspondent à des valeurs de mesure de courant débarrassées d'effets de perturbation et de retard, non retardées et non perturbées.

14. Procédé suivant la revendication 13,
**caractérisé en ce que**

- l'unité (21) d'observateur met à disposition, outre les valeurs $\hat{\underline{x}}(\boldsymbol{k})$ réelles de courant d'état non retardées, des valeurs $\hat{\underline{\boldsymbol{y}}}_d(\boldsymbol{k})$ de mesure de modèle d'état retardées, qui correspondent aux valeurs $\underline{\boldsymbol{y}}_d(\boldsymbol{k})$ de mesure d'état mesurables, les valeurs $\hat{\underline{\boldsymbol{y}}}_d(\boldsymbol{k})$ de mesure de modèle d'état étant comparées à des valeurs $\underline{\boldsymbol{y}}_d(\boldsymbol{k})$ de mesure d'état obtenues par des mesures en obtenant un écart de valeurs de mesure de modèle, l'écart de valeurs de mesure de modèle est envoyé du côté de l'entrée à l'unité (22) de modélisation et la modélisation est effectuée de manière à rendre aussi petit que possible l'écart de valeurs de mesure de modèle.

15. Procédé suivant la revendication 13 ou 14,
**caractérisé en ce que**

- on envoie l'écart de valeurs de mesure de modèle à l'unité (22) de modélisation par une unité (25) de contreréaction, qui amplifie l'écart de valeurs de mesure de modèle.

16. Procédé suivant l'une des revendications 13 à 15,
**caractérisé en ce que**

- la prise en compte d'effets de retard comprend la prise en compte de retards de mesure, qui proviennent de la détection numérique des grandeurs d'état du convertisseur, et la prise en compte de retards de réglage, qui sont provoqués par l'électronique (19) de commande.

17. Procédé suivant l'une des revendications 13 à 16,
**caractérisé en ce que**

- à la détection des valeurs $\underline{\boldsymbol{y}}_d(\boldsymbol{k})$ de mesure d'état, on mesure les grandeurs d'état du convertisseur (1), on échantillonne les signaux de mesure obtenus dans des stades d'échantillonnage en obtenant en continu des valeurs d'échantillonnage et on numérise ensuite les valeurs d'échantillonnage, la modélisation des retards de mesure qui s'établissent s'effectuant en faisant l'hypothèse que le retard de mesure correspond à une durée de plusieurs stades d'échantillonnage.

18. Procédé suivant la revendication 17,
**caractérisé en ce que**
l'on tient compte d'un retard de mesure de quatre stades d'échantillonnage.

19. Procédé suivant l'une des revendications 13 à 18,
**caractérisé en ce que**

- on modélise un retard $\tau$ de réglage suivant

$$\tau = (l + 1) \cdot T + \tau'$$

dans laquelle *l* est le nombre des stades d'échantillonnage, dont la somme plus petite que un est le retard $\tau$ de réglage, et $\tau'$ comme partie restante est plus court que la durée **T** entre deux stades **k** d'échantillonnage.

**20.** Procédé suivant la revendication 19,
**caractérisé en ce que**

- à la modélisation du retard de réglage, on tient compte de deux stades d'échantillonnage.

**21.** Procédé suivant l'une des revendications 13 à 20,
**caractérisé en ce que**

- on modélise le convertisseur à l'aide d'un modèle d'espace d'état suivant

$$\underline{\hat{x}}(k + 1) = \underline{\Phi}\underline{\hat{x}}(k) + \underline{\Gamma}\underline{u}(k)$$

$$\underline{\hat{y}}_d(k) = \underline{H}\underline{\hat{x}}(k)$$

dans lesquelles $\underline{\hat{x}}(k)$ est un vecteur d'état du convertisseur y compris des états retardés, $\underline{u}(k)$ est un vecteur des tensions de réglage, $\underline{\Phi}$, $\underline{\Gamma}$ et $\underline{H}$ sont des matrices de modèle et $\underline{\hat{y}}_d(k)$ un vecteur de valeurs de mesure de modèle d'état entachées de retards.

**22.** Procédé suivant l'une des revendications précédentes, **caractérisé en ce que**

- on détermine, à partir de valeurs d'énergie de circuit intermédiaire mesurées, des valeurs $\underline{\hat{w}}(k)$ d'état d'énergie de circuit intermédiaire au moyen d'une unité (21A) d'estimateur se reportant à un modèle de signal des d'énergie de circuit intermédiaire, l'unité (21A) calculant les paramètres du modèle de signal des valeurs $\underline{w}(k)$ d'énergie de circuit intermédiaire en déterminant une grandeur continue représentant respectivement une valeur $\underline{\hat{w}}(k)$ d'état d'énergie de circuit intermédiaire de la source de tension de rotation, du côté positif et du côté négatif, du convertisseur et
- on envoie des valeurs $\underline{\hat{w}}(k)$ d'état d'énergie de circuit intermédiaire en plus des valeurs $\underline{\hat{x}}(k)$ réelles de courant d'état à l'unité (16) de régulation.

**23.** Procédé suivant la revendication 22,
**caractérisé en ce que**

- on détecte, chacune pour soi, les valeurs d'état d'énergie de circuit intermédiaire des branches (2) de soupape à semi-conducteur de puissance, du côté positif et du côté négatif, du convertisseur (1),
- au moyen respectivement d'un estimateur (33, 34, 35; 36, 37, 38) de paramètres de l'unité (21A) d'estimateur, on calcule les paramètres du module de signal des valeurs $\underline{w}(k)$ d'énergie intermédiaire,
- on ajoute, chacune pour soi, avec formation de grandeurs continues d'énergie de circuit intermédiaire, les paramètres, décrivant chacun une proportion continue, des branches (2) de soupape à semi-conducteur de puissance du côté positif et du côté négatif.

**24.** Procédé suivant la revendication 23,
**caractérisé en ce que**

- on utilise des estimateurs de paramètres à algorithme récursif.

**25.** Procédé suivant la revendication 23 ou 24,
**caractérisé en ce que**

- on utilise comme estimateur un estimateur de paramètres ayant un modèle $\underline{w}(t)$ d'oscillation pour les valeurs d'énergie de circuit intermédiaire $\underline{w}(t) = A_0 + A_{k1} * cos(k\omega t) + A_{k2} * sin(k\omega t)$ pour $k = 1$ à n,

- dans laquelle $A_0$ est la proportion continue des valeurs d'énergie de circuit intermédiaire et $A_{k1}$ et $A_{k2}$ d'autres paramètres du modèle d'oscillation ainsi que $\omega$, la pulsation d'un réseau de tension alternatif relié au convertisseur (1).

**26.** Procédé suivant la revendication 24 ou 25, **caractérisé en ce que**

- on utilise un modèle d'oscillation ayant des paramètres $A_0(t)$ à $A_{k2}(t)$ qui dépendent du temps.

**27.** Procédé suivant la revendication 26, **caractérisé en ce que**

- on prescrit la variation en fonction du temps des paramètres par une fonction linéaire ou par une fonction exponentielle.

**28.** Procédé suivant la revendication 24 ou 25, **caractérisé en ce que**

- on utilise un modèle d'oscillation à paramètres $A_0$ à $A_{k2}$ constants dans le temps.

**29.** Procédé suivant l'une des revendications précédentes, **caractérisé en ce que** on utilise comme convertisseur (1) un convertisseur à niveau multiple, qui a des branches (2) de soupape à semi-conducteur de puissance reliées entre elles en un montage en pont, chaque branche (2) de soupape à semi-conducteur de puissance étant constituée d'un montage série de sous-modules (8) et chaque sous-module (8) comprenant un montage (9) de semi-conducteurs de puissance, ainsi qu'une unité (10) de condensateur montée en parallèle à celui-ci.

**30.** Système pour effectuer le procédé suivant l'une des revendications 1 à 3 et 6 à 29 de régulation d'un convertisseur (1), comprenant un montage en pont de branches de module de phase ayant chacune un montage en série de sous-modules ayant respectivement un montage à semi-conducteur à condensateur raccordé, comprenant

- une unité (16) de régulation, qui est reliée par son entrée à la sortie de valeurs de mesure du convertisseur et qui produit à sa sortie des valeurs $\underline{u}(k)$ de tension de réglage et
- une électronique (19) de commande, qui est montée en aval de l'unité (16) de régulation, qui met, en fonction des valeurs $\underline{u}(k)$ de tension de réglage, à disposition des signaux de commande et qui les transmet aux semi-conducteurs (S1, S2) de puissance du convertisseur (1),

**caractérisé en ce que**

- entre la sortie de valeurs de mesure du convertisseur (1) et l'entrée de l'unité (16) de régulation, il y a une unité (21) d'observateur, qui calcule les valeurs $\hat{\underline{x}}(k)$ réelles d'état à partir des valeurs $\underline{u}(k)$ de tension de réglage et en tenant compte de valeurs $\underline{x}(k)$ de courant mesurées,
- entre la sortie de valeurs de mesure du convertisseur (1) et l'entrée de l'unité (16) de régulation, il y a une unité (21A) d'estimateur, qui calcule les valeurs $\hat{\underline{w}}(k)$ réelles d'état d'énergie de circuit intermédiaire en tenant compte de valeurs $\underline{w}(k)$ d'énergie de circuit intermédiaire mesurées de la source de tension tournante, du côté (2P) positif et du côté (2N) négatif, du convertisseur (1), l'unité (21) d'observateur et l'unité (21A) d'estimateur modélisant le convertisseur (1), de manière à ce que les valeurs $\hat{\underline{x}}(k)$ réelles de courant d'état calculées et les valeurs $\hat{\underline{w}}(k)$ réelles d'état d'énergie de circuit intermédiaire correspondent, en régime permanent, aux valeurs de courant et d'énergie de circuit intermédiaire sans erreur et les valeurs $\hat{\underline{x}}(k)$, $\hat{\underline{w}}(k)$ de courant et d'énergie de circuit intermédiaire sans erreur sont envoyées à une unité de régulation constituée en régleur périodique à amplification variant périodiquement dans le temps.

**31.** Système suivant la revendication 30, **caractérisé en ce que**

- on utilise l'unité (21) d'observateur avec un modèle de système variant périodiquement dans le temps, qui, à partir de l'équation d'état générale

$$\dot{\underline{x}} = \underline{A} \cdot \underline{x} + \underline{B} \cdot \underline{u}$$

*x* étant une variable d'état, $\dot{\underline{x}}$ étant une dérivée en fonction du temps de la variable d'état, *A* étant une matrice de système, *B* étant une matrice d'entrée et *u* étant une variable d'entrée, a une matrice $\underline{A}_{PLTV}$ de système invariante dans le temps et une matrice $\underline{B}_{PLTV}(t)$ d'entrée variant dans le temps avec

$$\underline{x}_{PLTV} = \begin{bmatrix} \underline{x} \\ \underline{x}_{\alpha\beta} \\ \underline{x}_{dq^{-1}} \\ \underline{w}_{\alpha\beta} \\ \underline{w}_{dq^{-1}} \\ \underline{w} \end{bmatrix},$$

dans laquelle *x* est le courant mesuré à transformation park, $\underline{x}_{\alpha\beta}$ est le courant mesuré à transformation alpha-beta et $\underline{x}_{dq\text{-}1}$ le courant mesuré à retransformation park deux fois (système contraire), $\underline{w}_{\alpha\beta}$ est les sommes de valeurs d'énergie de circuit intermédiaire mesurées et à transformation alpha-beta de la source de tension tournante supérieure et inférieure et $\underline{w}_{dq\text{-}1}$ représente les différences de valeurs d'énergie de circuit intermédiaire mesurées et la transformation alpha-beta entre la source de tension de rotation supérieure et inférieure et w représente les valeurs d'énergie de circuit intermédiaire mesurées de tout le convertisseur.

**32.** Système pour effectuer le procédé suivant l'une des revendications 4 et 5, ainsi que 6 à 19, pour réguler un convertisseur (1), comprenant un montage en pont de branches (2) de module de phase ayant chacune un montage en série de sous-modules (8) ayant chacun un montage (9) à semi-conducteurs à condensateur (10) raccordé, comprenant

- une unité (16) de régulation, qui est reliée par son entrée à la sortie de valeurs de mesure du convertisseur et qui produit à sa sortie des valeurs *u*(*k*) de tension de réglage et
- une électronique (19) de commande, qui est montée en aval de l'unité (16) de régulation, qui met, en fonction des valeurs *u*(*k*) de tension de réglage, à disposition des signaux de commande et qui les transmet aux semi-conducteurs (S1, S2) de puissance du convertisseur (1),

**caractérisé en ce que**

- entre la sortie de valeurs de mesure du convertisseur (1) et l'entrée de l'unité (16) de régulation, il y a une unité (21) d'observateur, qui calcule les valeurs $\hat{x}(k)$ réelles d'état à partir des valeurs *u*(*k*) de tension de réglage et en tenant compte de valeurs *x*(*k*) de courant mesurées,
- entre la sortie de valeurs de mesure du convertisseur (1) et l'entrée de l'unité (16) de régulation, il y a une unité (21A) d'estimateur, qui calcule les valeurs $\hat{w}(k)$ réelles d'état d'énergie de circuit intermédiaire en tenant compte de valeurs *w*(*k*) d'énergie de circuit intermédiaire mesurées de la source de tension tournante, du côté (2P) positif et du côté (2N) négatif, du convertisseur (1), l'unité (21) d'observateur et l'unité (21A) d'estimateur modélisant le convertisseur (1), de manière à ce que les valeurs $\hat{x}(k)$ réelles de courant d'état calculées et les valeurs réelles d'état d'énergie de circuit intermédiaire de toute l'énergie du convertisseur et la différence des valeurs *w*(*k*) d'énergie de circuit intermédiaire de la source de tension tournante, du côté (2P) et du côté (2N) négatif, du convertisseur correspondent, en régime permanent, aux valeurs de courant et d'énergie de circuit intermédiaire sans erreur et les valeurs $\hat{x}(k)$ et les valeurs $\hat{x}(k)$ d'énergie de circuit intermédiaire sans erreur sont envoyées à une unité de régulation constituée en régleur périodique à amplification variant périodiquement dans le temps.

**33.** Système suivant la revendication 30 ou 31,
**caractérisé en ce que**

- une unité (14') pilote périodique reliée du côté de la sortie à un circuit (15) sommateur monté en amont du régleur (16) périodique a une période correspondant à la période du courant alternatif.

**34.** Système suivant l'une des revendications 30 ou 33,

**caractérisé en ce que**

- le régleur (16) périodique est constitué de manière à effectuer son amplification variant dans le temps d'une manière périodique au moyen d'une commutation périodique de sa matrice de régleur.

**35.** Système suivant l'une des revendications 30 à 34,
**caractérisé en ce que**

- l'unité (21) d'observateur est équipé de manière à calculer des valeurs $\hat{\underline{x}}(\underline{k})$ réelles d'état à partir des valeurs $\underline{u}(\underline{k})$ de tension de réglage et des valeurs $\underline{y_d}(\underline{k})$ de mesure d'état en tenant compte d'effets de perturbation et/ou d'effet de retard, de façon à ce que les valeurs $\hat{\underline{x}}(\underline{k})$ réelles d'état correspondent à un régime permanent à des valeurs de mesure du courant débarrassées de perturbations et/ou non perturbées.

**36.** Système suivant l'une des revendications 30 à 35,
**caractérisé en ce que**

- à la sortie du convertisseur (1), est raccordée l'unité (21A) d'estimateur reproduisant le modèle de signal de valeurs $\underline{w}(\underline{k})$ d'énergie de circuit intermédiaire et
- l'unité (21) d'observateur et l'unité (21A) sont reliées du côté de la sortie à des entrées réelles de l'unité (16) de régulation.

**37.** Système suivant la revendication 36,
**caractérisé en ce que**

- pour un convertisseur (1) ayant six branches (2) de soupape à semi-conducteur de puissance, l'unité (21A) d'estimateur a, pour chacune des branches (2) de soupape à semi-conducteur de puissance du côté positif, respectivement un estimateur (33, 34, 35) et, pour chacune des branches (2) de soupape à semi-conducteur de puissance du côté négatif, respectivement un autre estimateur (36, 37, 38).

**38.** Système suivant l'une des revendications 30 à 37,
**caractérisé en ce que**

- l'unité (21) d'observateur a une unité (22) de modélisation, qui simule le convertisseur (1) et qui, par son entrée, est reliée à la sortie de l'unité (16) de régulation et, par son autre entrée, à la sortie de l'unité (25) de contreréaction,
- l'unité (25) de contreréaction est reliée à la sortie d'un circuit (24) de sommation, qui, par son entrée, est raccordé à la sortie du convertisseur (1) et, par son autre entrée, à la sortie d'une unité (23) de séparation, l'unité (23) de séparation étant reliée à la sortie de l'unité (22) de modélisation et
- la sortie de l'unité (22) de modélisation est reliée à l'entrée de l'unité (16) de régulation par une autre unité (26) de séparation.

**39.** Système suivant l'une des revendications 30 à 38,
**caractérisé en ce que**

- le convertisseur (1) est un convertisseur à niveau multiple, qui a des branches (2) de soupape à semi-conducteur de puissance reliées entre elles en un montage en pont, chaque branche (2) de soupape à semi-conducteur de puissance étant constituée d'un montage série de sous-modules (8) et chaque sous-module (8) comprenant un montage (9) de semi-conducteurs de puissance, ainsi qu'une unité (10) de condensateur montée en parallèle à celui-ci.

# FIG 1

FIG 2

FIG 3

FIG 4

# FIG 5

EP 2 534 748 B1

**FIG 6**

**FIG 7**

**FIG 8**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008067784 A1

**In der Beschreibung aufgeführte Nicht-Patentliteratur**

- Modelling and Current Control of Modular Multilevel Converters considering Actuator and Sensor Delays. **P. MUENCH et al.** IECON 2009, 35th Annual Conference of IEEE Industrial Electronics. IEEE, 03. November 2009, 1633-1638
- **SINGH, B. N. et al.** Fuzzy Control of Integrated Current controlled Converter-Inverter fed Cage Induction Motor Drive. *IEEE/IAS International Conference on Hyderabad.,* 05. Januar 1995, 153-159

- The Periodic Riccati Equation. **BITTANTI, S. ; COLANERI, P. ; DE NICOLAO, G.** The Riccati Equation. 1991
- **GÖRGES ; DANIEL ; IZÄK MICHAL ; LIU STEVEN.** Optimal Control of Systems with Resource Constraints. *Proceedings of the 46th IEEE Conference on Decision and Control,* 2007, 1070-1075